**Europäisches Patentamt**

**European Patent Office**

**Office européen des brevets**

(19)

(11) Veröffentlichungsnummer: **0 096 814**
**B1**

(12) # EUROPÄISCHE PATENTSCHRIFT

(45) Veröffentlichungstag der Patentschrift:
24.02.88

(51) Int. Cl.⁴: **F 16 H 3/44** //
**F16H3/70**

(21) Anmeldenummer: **83105518.1**

(22) Anmeldetag: **03.06.83**

(54) **Kupplungslos veränderbares Zahnradgetriebe.**

(30) Priorität: **04.06.82 DE 3221236**

(43) Veröffentlichungstag der Anmeldung:
**28.12.83 Patentblatt 83/52**

(45) Bekanntmachung des Hinweises auf die Patenterteilung:
**24.02.88 Patentblatt 88/8**

(84) Benannte Vertragsstaaten:
**AT BE CH DE FR GB IT LI LU NL SE**

(56) Entgegenhaltungen:
**FR-A-483 278**
**FR-A-973 702**
**US-A-3 051 022**
**US-A-3 374 691**

(73) Patentinhaber: **Koser, Manfred, Untere Inntalstrasse 17, D-8398 Pocking 2 Hartkirchen (DE)**

(72) Erfinder: **Koser, Manfred, Untere Inntalstrasse 17, D-8398 Pocking 2 Hartkirchen (DE)**

(74) Vertreter: **Kraus, Walter, Dr., Patentanwälte Kraus, Weisert & Partner Thomas-Wimmer-Ring 15, D-8000 München 22 (DE)**

EP 0 096 814 B1

## Beschreibung

Die Erfindung betrifft ein kupplungslos veränderbares Zahnradgetriebe mit Gliedern, die mittels einer Spannvorrichtung zu einem Kreis mit veränderlichem Durchmesser als Regelrad aufspannbar sind, mit dem wenigstens ein Abgreifrad kämmt, wobei zum Steuern des Zu- und Abführens von Gliedern in den bzw. aus dem Kreis eine Steuereinrichtung vorgesehen ist und wobei jedes Glied in gleichem Abstand vom Mittelpunkt des Kreises gehaltert ist. Dieses Getriebe ist insbesondere in Fahrzeugen oder Maschinen, bevorzugt in solchen mit Verbrennungsmotoren, anwendbar.

Veränderbare Getriebe haben die Aufgabe, unter Berücksichtigung des Energieverbrauchs und des Bedienungskomforts die Motordrehmomente dem erforderlichen Kraftbedarf sowie den Arbeitsbedingungen anzupassen bzw. bei Fahrzeugen die Beschleunigung und das Verzögerungsverhalten zu verbessern.

Gegenwärtig verwendet man für diese Aufgabe bei Fahrzeugen vorwiegend gewöhnliche Schaltgetriebe, teilweise eine sogenannte Wandlerautomatik und vereinzelt auch eine Sport-oder Halbautomatik. In wenigen Fällen werden außerdem auch stufenlose Getriebe angewandt, sowie rein hydrodynamische und elektrodynamsiche Drehmomentwandler.

Diese Kraftübertragungssysteme erfüllen aber den beabsichtigten Zweck nur unvollkommen. So weisen Schaltgetriebe zwischen den einzelnen Übersetzungsstufen große Lücken auf, haben Verluste durch die Kupplung und sind umständlicher zu bedienen als andere Kraftübertragungssysteme. Die heute übliche Wandlerautomatik ist keineswegs eine echte Vollautomatik, insbesondere deswegen, weil sie ein widersinniges Verzögerungsverhalten hat, nämlich bei Zurücknehmen des Gaspedals hochanstatt herunterschaltet, und sie erreicht, wie die übrigen komfortableren Kraftübertragungssysteme ihr bedienungsmäßig günstiges Automatikverhalten in der Regel nur auf Kosten des Wirkungsgrads.

Aus der französischen Patentschrift 483 278 ist ein kupplungslos veränderbares Kettengetriebe bekannt, in dem eine Kette so aufgespannt ist, daß auf ihrem Umfang ein Zahnrad derart abrollen kann, daß es mit den Kettengliedern dieser Kette kämmt. Durch eine Vorrichtung ist es möglich, in die im wesentlichen kreisförmig mittels Führungen aufgespannte Kette von außen mehr Kettenglieder zuzuführen oder Kettenglieder nach außen wegzunehmen, so daß die Zahl der mit dem Zahnrad zusammenwirkenden Kettenglieder und damit das Übersetzungsverhältnis des Getriebes zwischen der Eingangswelle und der Ausgangswelle verändert wird.

Trotz dieses Aufbaus ist das in der französischen Patentschrift 483 278 beschriebene Getriebe, soweit die im wesentlichen zu einem Kreis aufgespannte Kette und das damit kämmende Zahnrad betroffen sind, kein Zahnradgetriebe, und die Kette ist auch nicht als Zahnrad aufgespannt, weil das für Zahnradgetriebe wichtigste Merkmal eines Zahnrads, nämlich das Verzahnungsgesetz, nach dem alle Zähne im gleichen Radius feststehen müssen und ein konstanter Achsabstand der kämmenden Zahnräder vorhanden sein muß, nicht erfüllt ist. Diese Bedingung ist wesentlich für die grundsätzlichen Vorteile von Zahnradgetrieben gegenüber Kettengetrieben.

Das Verzahnungsgesetz bei der Kette in dem Getriebe nach der französischen Patentschrift 483 278 ist insbesondere aus folgenden Gründen nicht erfüllt:

Es sind immer nur einzelne Kettenglieder der Kette durch die Führungen erfaßt, und zwischen diesen, zum Aufspannen der Kette als Angriffspunkte verwendeten Kettengliedern befinden sich jeweils mehrere freihängende Kettenglieder; das hat schwerwiegende Nachteile zur Folge.

Zunächst sind die einzelnen Kettenglieder der Kette gegeneinander beweglich, und die Kette ist entgegen der zeichnerischen Darstellung nicht als Kreis aufgespannt, da das mit diesem Aufbau nicht möglich ist, sondern vielmehr nur als Vieleck. Bedingt durch die zum Zwecke der Änderung der Übersetzung des Getriebes erwünschte Längenänderung des aufgespannten Teils der Kette liegt immer nur ein Teil der Kettenglieder auf den Führungen, während die restlichen Kettenglieder stets frei gespannt sind.

Dieser Aufbau hat seinerseits zur Folge, daß sich die Kettenglieder radial bewegen können, und wegen des Druckes, den das mit der Kette kämmende Zahnrad an seiner Eingriffsstelle notwendigerweise wegen der erforderlichen Kraftübertragung ausübt, wird die durch ein Vieleck angenäherte Kreisform, die oben als im wesentliche kreisförmige bezeichnet worden ist, deformiert, da das Zahnrad die Kette an der Eingriffsstelle nach außen drückt. Als Reaktion hierauf werden die übrigen Kettenglieder nach innen gezogen. Dieser Vorgang vollzieht sich wegen des Umlaufs des Zahnrads um den aufgespannten Teil der Kette herum fortlaufend über den im wesentlichen kreisförmigen, wenn auch tatsächlich vieleckigen, Umfang der Kette hinweg. Das heißt, daß immer eine "Kettenausbeulung" umläuft. Dadurch wird, abgesehen von der dauernden Deformierungsarbeit, die ganze Kettenanordnung in Schwingung versetzt.

Die Kettengelenke bewegen sich hierbei ähnlich wie bei einer laufenden Kette, eine Abwälzfunktion im Sinne des Verzahnungsgesetzes ist nicht möglich, und das mit der Kette kämmende Kettenrad gleitet unter Druck zwischen unterschiedlichen Radien der aufgespannten Kette hin und her, da sich diese unterschiedlichen Radien durch die umlaufende Ausbeulung ergeben.

Es sei an dieser Stelle darauf hingewiesen, daß nach Angaben von Kettenherstellern eine ruhende Kette kraftmäßig ca. zehnmal so hoch belastet werden kann, wie eine sich bewegende Kette, da Verschleiß und Materialrisse hauptsächlich durch die Gelenkreibung und Schwingungen der Kettenglieder verursacht werden. Infolgedessen ergeben sich auch die bekannten erheblichen Wirkungsrad- und Abnutzungsunterschiede zwischen Zahnrad- und Kettengetrieben.

Bei der Anordnung nach der französischen Patentschrift 483 278 ist eine derartige Kettenspannung, daß ein einigermaßen gleichmäßiger Laufradius des Kettenrads gewährleistet ist, wegen der laufenden zahlenmäßigen Veränderung zwischen der Anzahl der Aufhängungspunkte und der Anzahl der Kettenglieder überhaupt nicht möglich. Es ist infolgedessen bei der Anordnung nach der französischen Patentschrift 483 278 keine kraftschlüssige Verbindung zwischen der aufgespannten Kette und dem Kettenzahnrad möglich, die es verhindern könnte, daß es zu einem Abheben zwischen der aufgespannten Kette und dem Kettenzahnrad oder zu einem Verspannen der aufgespannten Kette kommt.

Hinsichtlich der Schwingungen, die in der Kettenanordnung nach der französischen Patentschrift 483 278 erzeugt werden, ist das Getriebe nach dieser Druckschrift praktisch völlig unbrauchbar für Kraftfahrzeuge. Durch die erwähnten Ausbeulungen an der Eingriffsstelle zwischen der Kette und dem Kettenzahnrad und die damit zusammenhängenden Einbeulungen an anderen Stellen der Kette entsteht ein besonders starker Polygoneffekt, der bei heute üblichen Motordrehzahlen in einem Getriebe nach der Zeichnung der genannten französischen Patentschrift Aufschlagschwingungen von ca. 1000 Hz bzw. Gesamtschwingungen von ca. 12000 Hz zur Folge hat. Solche Frequenzen zerstören die Kette in kürzester Zeit. Abgesehen von der Zerstörung der Kette in kürzester Zeit ist auch durch diese Schwingungen kein kontinuierlicher Eingriff zwischen Kettenzahnrad und Kette mehr gewährleistet.

Durch die Bewegung der Kette in dem Getriebe nach der französischen Patentschrift 483 278 und den zur Übertragung von einigermaßen brauchbaren Kräften erforderlichen hohen Anpreßdruck ergeben sich verhältnismäßig sehr hohe Reibungsverluste, die zur Folge haben, daß dieses Getriebe nur einen relativ niedrigen mechanischen Wirkungsgrad hat. Dieser Wirkungsgrad entspricht dem eines üblichen Reibungsgetriebes, das aber im Gegensatz zu dem Getriebe nach der französischen Patentschrift 483 278 einen wesentlich einfacheren Aufbau besitzt.

Insgesamt hat also das Getriebe nach der französischen Patentschrift 483 278 die Nachteile der üblichen Reibungsgetriebe und gleichzeitig die Nachteile der Kompliziertheit eines Kettengetriebes. Abgesehen hiervon ist diese Getriebe technisch in üblichen Kraftübertragungen, wie beispielsweise bei Kraftfahrzeugen, überhaupt nicht verwendbar, da es, wie bereits erwähnt, in kürzester Zeit zu Bruch gehen würde, abgesehen davon, daß es unrund und völlig unzuverlässig laufen würde, wobei ein Kraftschluß nur unter einer solchen Druckspannung möglich ist, die mehr als bei Reibungsgetrieben über der übertragbaren Kraft liegen muß.

Weiter ist aus der FR-A-973 702 ein kupplungslos veränderbares Zahnradgetriebe der eingangs angegebenen Art bekannt, das zwar eine wesentliche Verbesserung gegenüber dem vorstehend erörterten Getriebe nach der FR-A-483 278, insbesondere hinsichtlich der Stabilität des Aufbaus und der Kettenführung, darstellt. Jedoch erfüllt das Getriebe nach der FR-A-973 702 das Verzahnungsgesetz nicht, obwohl es diesem sehr nahe kommt. Denn hier sind die Zahnglieder zwar auf einer konischen Fläche aufliegend angeordnet, jedoch fehlen Führungen für die Zahnglieder, welche einen exakten Sitz der Zahnglieder in der jeweiligen Schaltstellung, insbesondere die Wiederholgenauigkeit der Position der Zahnglieder in dieser Schaltstellung, gewährleisten. Deshalb wird durch dieses Getriebe nach der FR-A-973 702 im Gegensatz zum Verzahnungsgesetz kein sauberes Abwälzen der Zahnflanken zwischen Zahngliedern und Abgreifrädern erreicht. Infolge dieser Verhältnisse ergeben sich erfahrungsgemäß Wirkungsgradverluste und Beschädigungen, die bis hin zur Zerstörung der Zähne führen können.

Der Erfindung liegt die Aufgabe zugrunde, ein kupplungslos veränderbares Zahnradgetriebe der eingangs genannten Art zu schaffen, das außer einem optimalen Wirkungsgrad, wie er nur mit Zahnradgetrieben erreicht werden kann, eine, stufenlosen Getrieben ähnliche Drehmomentanpassung gestattet, die es ermöglicht, mit der maximalen Motorleistung zu beschleunigen, und das außerdem Regeleigenschaften, die auf den Einsatz modernster Technologien, wie zum Beispiel der Computertechnik, abgestimmt sind, und echte Vollautomatiken mit höchstem Bedienungskomfort ermöglicht.

Diese Aufgabe wird dadurch gelöst, daß das kupplungslos veränderbare Zahnradgetriebe der eingangs genannten Art erfindungsgemäß so ausgebildet ist, daß als Spannvorrichtung spiralförmige Führungswege vorgesehen sind, welche so verlaufen, daß jedes Glied in gleichem Abstand vom Mittelpunkt des Kreises gehalten ist.

Durch diese spiralförmigen Führungswege wird eine vollständige Erfüllung des Verzahnungsgesetzes gewährleistet, d.h. die Glieder sind exakt und fest im gleichen Abstand vom Mittelpunkt des Kreises gehalter.

Das bedeutet, daß jedes einzelne Glied für sich, unabhängig von den benachbarten Gliedern, durch die Spannvorrichtung radial feststehend gehaltert ist, wobei sich natürlich der radiale Abstand der Glieder vom Mittelpunkt des Kreises beim Zu- und Abführen eines Gliedes in den bzw. aus dem Kreis ändert. Trotzdem ist auch während des Zu- und Abführens eines Gliedes in den bzw. aus dem Kreis jedes Glied für sich durch die Spannvorrichtung gehalten.

Selbstverständlich haben die von den Gliedern gebildeten Zähne, mit denen das Abgreifrad kämmt, stets gleichen bzw. im wesentlichen gleichen Abstand voneinander.

Mit dieser Ausbildung werden die oben im einzelnen dargelegten Nachteile des Kettengetriebes gemäß der FR-A-483 278 und der FR-A-973 702 überwunden. Im übrigen macht das erfindungsgemäße Zahnradgetriebe trotzdem komplizierte Zahnradschaltkombinationen zur Veränderung des Übersetzungsverhältnisses und zur Erzielung der verschiedenen Übersetzungsverhältnisse überflüssig, indem das Übersetzungsverhältnis des Getriebes lediglich durch einfache Veränderung der Zähnezahl des Regelrads verstellt wird. Zur Veränderung des Übersetzungsverhältnisses sind nämlich nur zwei Steuerfunktionen erforderlich, eine Plus- und eine Minusfunktion, d.h. jeweils eine Vergrößerung oder eine Verkleinerung der Zähnezahl. Aus diesem Grunde wird ein solches veränderbares Zahnradgetriebe gemäß der Erfindung nachfolgend auch als Digital-Getriebe bezeichnet. In ihrer Bauart können diese Digitalgetriebe als Vielgang-Schnellschaltgetriebe mit stufenlosem Charakter oder in besonderer Bauform als rein stufenlose Getriebe ausgeführt sein.

Vorzugsweise ist das kupplungslos veränderbare Zahnradgetriebe so ausgebildet, daß die spiralförmigen Führungswege auf einer oder mehreren Kegelscheiben vorgesehen sind. Auf diese Weise ergibt sich eine verhältnismäßig einfache Spannvorrichtung, die es trotzdem gewährleistet, daß die Glieder zu einem Kreis aufgespannt sind.

In einer einfachen Ausführungsform ist an das Abgreifrad ein als Planetenrad angeordnetes Synchronrad, vorzugsweise axial, angekoppelt, das seinerseits an ein Ausgleichsrad angekoppelt ist. Hierbei kann zur Ankopplung des Synchronrads an das Ausgleichsrad eine Gelenkwelle vorgesehen sein, die jedoch bei höheren Drehzahlen problematisch wird.

Eine Möglichkeit, in diesem Falle ohne Gelenkwelle auszukommen, besteht darin, daß zwischen Regelrad und Abgreifrad ein außen verzahntes oder innen und außen verzahntes Zwischenrad vorgesehen ist, welches ständig einen Kraftschluß zwischen Regelrad und Abgreifrad aufrechterhält und dessen Achse beim Verändern des Regelraddurchmessers um die Achse des Abgreifrads verschwenkbar ist.

Eine andere Möglichkeit eines gelenkwellenlosen Aufbaus besteht darin, daß zwischen dem Ausgleichsrad und dem Synchronrad ein innen und außen verzahntes Zwischenrad vorgesehen ist, welches ständig einen Kraftschluß zwischen Ausgleichsrad und Synchronrad aufrechterhält und dessen Achse am Planetenträger fest gelagert ist, wobei die Achse des Synchronrads beim Verändern des Regelraddurchmessers um die Achse des Zwischenrads verschwenkbar ist.

Weiter kann das erfindungsgemäße Zahnradgetriebe so ausgebildet sein, daß die Glieder im Regelrad in einer endlos geschlossenen Anordnung vorgesehen und über eine gegensinnig proportional zu der Spannvorrichtung wirkende Gegenspannvorrichtung geführt sind.

Der Vorteil dieser Ausführungsform besteht insbesondere darin, daß die Gegenspannvorrichtung immer genau die Anzahl der Glieder der Gliederkette oder des Gliederbands aufnimmt, welche von der Spannvorrichtung abgegeben werden, und umgekehrt. Ein solches Regelrad, das sowohl die Spannvorrichtung als auch die Gegenspannvorrichtung umfaßt, wird nachstehend auch als Proportionalregelrad bezeichnet. Die Glieder können sowohl unverbunden als auch als Gliederkette oder Gliederband vorgesehen sein. Die Gliederkette kann insbesondere als Rollen- oder Zahnkette ausgeführt sein, welche über kegelförmige Spannbacken der Spannvorrichtung und der Gegenspannvorrichtung aufgespannt ist, wobei die Verlängerung oder Verkürzung des im wirksamen Spannradius der Spannbacken erfaßten Teils der Gliederkette durch Verstellung der Spannbacken erfolgt.

Eine weitere Ausführungsform der Erfindung zeichnet sich dadurch aus, daß der wirksame Zahneingriffsteil des Regelrads ein Kreisabschnitt ist, und daß mehrere sich miteinander synchron drehende Abgreifräder derart vorgesehen sind, daß stets wenigstens eines derselben mit dem wirksamen Zahneingriffsteil kämmt. Ein wesentlicher Vorteil dieser Ausführungsform ist es, daß erheblich stärkere Gliederketten oder -bänder für das Regelrad verwendet werden können, weil die Einspeisung der Gliederkette oder des Gliederbandes in den wirksamen Spannradius im Gegensatz zu den weiter oben beschriebenen Ausführungsformen, die geschlossene Regelräder aufweisen, über keine Knickstelle erfolgt, sondern vielmehr eine geradlinige Einspeisung in den wirksamen Spannradius erfolgen kann, wodurch es auch ermöglicht wird, flexible Stahlbänder mit darauf befindlichen Zähnen als Gliederbänder zu verwenden.

Während in den weiter oben beschriebenen Ausführungsformen jeweils ein Glied im Zeitintervall einer Umdrehung des Abgreifrads um das Regelrad in den bzw. aus dem wirksamen Spannradius zu- bzw. abgeführt werden muß, ist es bei der zuletzt genannten Ausführungsform möglich, dieses Zu- oder Abführen eines Glieds in den wirksamen Spannradius während einer beliebigen Zeitdauer durchzuführen, wenn gemäß einer Weiterbildung der Erfindung die Zahnstellung der Abgreifräder synchron zur Zahnstellung des Regelrads verstellbar einfedernd ausgeführt wird, so daß das Zuführen oder Abführen eines Gliedes in den bzw. aus dem wirksamen Spannradius unabhängig von der Drehstellung der Abgreifräder durchführbar ist.

Außerdem ermöglicht es das "offene" Regelrad, dessen Zahneingriffsteil sich also nur über einen Kreisabschnitt erstreckt, die Zahl der Übersetzungsverhältnisse zu verdoppeln, wenn nach einer anderen Weiterbildung der Erfindung die Zahnstellung der Abgreifräder synchron zur Zahnstellung des Regelrads um einen halben Zahn verstellbar ist, so daß also jeweils nur auf einmal ein halber Zahn in den wirksamen Spannradius eingespeist bzw. aus letzterem abgeführt wird.

Es ist sogar möglich, im Falle des offenen Regelrads das Übersetzungsverhältnis völlig stufenlos veränderbar zu machen, indem die Zahnstellung der Abgreifräder sich zur Zahnstellung des Regelrads kontinuierlich synchronisierend gemacht wird. Dieses kontinuierliche Synchronisieren kann nicht nur durch eine entsprechende mechanische Ausbildung, sondern auch elektronisch erzielt werden (stufenloses Zahnradgetriebe).

Unabhängig von der jeweiligen Ausführungsform des erfindungsgemäßen Getriebes kann das Getriebe so ausgebildet sein, daß als Steuereinrichtung eine Steuerelektronik zum Verändern der Kraftübertragungsverhältnisse des veränderbaren Zahnradgetriebes vorgesehen ist, welches eine echte Vollautomatikfunktion hat, indem mit einem Bedienungselement, vorzugsweise mit einem Wählhebel, einem Schalter oder einer Tastatur, die Fahrrichtung eines mit dem Zahnradgetriebe betriebenen Fahrzeugs auf Stillstand, Vorwärts oder Rückwärts vorprogrammierbar ist, wobei das Gaspedal über eine in der Steuerelektronik vorgesehene Regelelektronik in Vorwärts- oder Rückwärtsfahrrichtung als Geschwindigkeits-Sollwertgeber und deshalb gleichzeitig als Beschleunigungs- und Motorbremsregler sowie als Anahlte- und Anfahrsteuerung arbeitet, während es im Stillstand direkt auf den Motor wirkt. Dadurch wird ein nach dem Stande der Technik bisher überhaupt noch nicht verfügbares vollautomatisches Kraftübertragungssystem erhalten, welches insbesondere den Vorteil hat, daß es im Gegensatz zu dem eingangs erwähnten widersinnigen Verzögerungsverhalten der derzeit üblichen Wandlerautomatiken beim Zurücknehmen des Gaspedals auf einen niedrigen Gang schaltet, so daß insgesamt das Gaspedal wie ein stufenloser Regler eines Elektrofahrzeugs wirkt.

Insbesondere kann hierbei die Ausbildung so sein, daß die Steuerelektronik einen Mikroprozessor und einen Speicher aufweist, wobei der Mikroprozessor zum Ansteuern des jeweils idealen Übersetzungsverhältnisses des Zahnradgetriebes vorzugsweise jeweilige Betriebsdaten mit vorgegebenen Speicherwerten vergleicht und das Zahnradgetriebe so lange vorwärts- oder zurückschaltet, bis die Betriebsdaten optimal auf den jeweils vorgegebenen Speicherwert abgestimmt sind. Das hat insbesondere den Vorteil, daß hierdurch der Arbeitsaufwand des Mikroprozessors gegenüber herkömmlichen Steuerelektroniken auf ein Minimum reduziert wird, ohne die effektive Leistung der Steuerelektronik zu vermindern.

Um ein ruckfreies Anfahren bei Vielgang-Schnellschaltgetrieben mit großen und wenigen Übersetzungsstufen zu erreichen, kann das erfindungsgemäße Getriebe zur Ruckdämpfung in Reihe mit einer drehelastischen Verbindung angeordnet sein, die in Zusammenwirkung mit einer stationären Meßeinrichtung als Drehzahl- und Belastungsgeber für eine vereinfachte Regelung des Getriebes, wie sie in gewissen Fällen ausreichend sein kann, ausgebildet ist.

Das Zahnradgetriebe nach der Erfindung kann weiterhin so ausgebildet sein, daß es in Reihe mit einer hydrodynamischen Kupplung oder einem Drehmomentwandler angeordnet ist, die bzw. der mittels einer elektromagnetischen oder hydraulischen Kupplung im wesentlichen während des Anfahrvorgangs zur Ruckdämpfung oder durch eine Umschaltung für Schiebebetrieb eines Fahrzeugs ständig wirksam gemacht wird.

Die Erfindung wird nachstehend anhand einiger in den Figuren der Zeichnung dargestellter, bevorzugter Ausführungsformen näher erläutert; es zeigen:

Fig. 1 eine erste, besonders einfache Ausführungsform eines erfindungsgemäßen Getriebes in perspektivischer Darstellung;

Fig. 2a bis 2c schematische Darstellungen einer zweiten Ausführungsform eines Getriebes nach der Erfindung in verschiedenen Drehrichtungszuständen;

Fig. 3a bis 3c eine dritte Ausführungsform des erfindungsgemäßen Getriebes, ebenfalls in verschiedenen Drehrichtungszuständen;

Fig. 4 eine Hintereinanderschaltung von zwei Getrieben der in den Fig. 2a bis 2c gezeigten Art;

Fig. 5 eine Teilansicht einer vierten Ausführungsform eines Getriebes nach der Erfindung, bei welcher der wirksame Zahneingriffsteil des Regelrads nur ein Kreisabschnitt ist und zwei sich miteinander synchron drehende Abgreifräder vorgesehen sind, wobei im wesentlichen nur das Regelrad und die beiden Abgreifräder dargestellt sind;

Fig. 6a und 6b zwei Darstellungen zur Erläuterung der Wirkungsweise eines einfedernden Abgreifrads, wobei außerdem die Fig. 6a zur Erläuterung der Wirkungsweise eines um einen halben Zahn verstellbaren oder sich kontinuierlich synchronisierenden Abgreifrads dient;

Fig. 7a bis 7c Darstellungen zur Wirkungsweise der einfedernden Verstellbarkeit, der Halbzahnverstellung und der kontinuierlichen Synchronisierung der Zahnstellung der Abgreifräder für den Fall, in welchem sekundäre Abgreifräder vorgesehen sind, wobei die Fig.7a und 7b zur Erläuterung der einfedernden Verstellung und der Halbzahnverstellung dienen, während die Fig. 7a bis 7c zur Erläuterung der kontinuierlichen Synchronisierung dienen;

Fig. 8 eine schematische Darstellung einer Ausführungsform eines Regelrads für Außenumlauf des entsprechenden Abgreifrads;

Fig. 9 eine Ausführungsform eines Regelrads mit Innenumlauf des Abgreifrads, wobei die Gliederkette von einer Seite her zugeführt und von der gleichen Seite auch abgeführt wird;

Fig. 10 ein Proportionalregelrad mit Innenumlauf des Abgreifrads;

Fig. 11 ein Proportionalregelrad, das für Innen- und/ oder Außenumlauf des Abgreifrads geeignet ist;

Fig. 12 ein offenes Regelrad mit zwei Abgreifrädern und einseitiger Zu- und Abführung von Gliedern;

Fig. 13 ein offenes Regelrad mit geschlossener Gliederkette;

Fig. 14a und 14b eine Darstellung des Regelrads nach Fig. 13 in zwei Betriebsstellungen, wobei außerdem die Spannbacken der entsprechenden Spannvorrichtung und deren Bewegungsrichtung angedeutet sind;

Fig. 15 eine bevorzugte technische Ausführungsform eines Proportionalregelrads in Seiten- und Stirnansicht;

Fig. 16a bis 16d verschiedene Ausführungsformen von Spannvorrichtungen;

Fig. 17a und 17b die Funktionsgeometrie der Gliederbewegungen beim Vergrößern bzw. Verkleinern eines Regelraddurchmessers;

Fig. 18 einen Ausschnitt aus einem Regelrad mit einspuriger Zu- und Abführung von einzelnen Gliedern in Umlaufrichtung;

Fig. 19 einen Ausschnitt aus einem Regelrad mit umlaufenden Schaltpunkten, deren Glieder sich spiralförmig bewegen;

Fig. 20 bis 22 verschiedene Ausführungen der Gliederkette bzw. des Gliederbands;

Fig. 23a und 23b eine Ausführungsform des erfindungsgemäßen Getriebes, in welcher das Synchronrad gleichzeitig als sekundäres Abgreifrad und das Ausgleichsrad als Sonnenrad angeordnet sind;

Fig. 23c eine Ausführungsform des Getriebes, die eine Kombination der Bauprinzipien der Fig. 2a bis 2c und 23a bis 23b darstellt;

Fig. 24a und 24b gelenkwellenlose Höhenverstellungen;

Fig. 25 eine perspektivische Darstellung eines Vielgang-Schnellschalt-Getriebes gemäß der Erfindung mit Proportionalregelrad;

Fig. 26 eine perspektivische Darstellung eines erfindungsgemäßen Getriebes mit offenem Regelrad, in welchem die anhand der Fig. 5 bis 7c beschriebenen Ausführungsarten verwirklichbar sind;

Fig. 27 eine Schnittdarstellung eines Getriebes für Frontantrieb mit hydraulischem Impulsdämpfer;

Fig. 28a eine Darstellung eines Bedienungshebels für manuelle oder automatische Schaltung eines erfindungsgemäßen Getriebes;

Fig. 28b eine Darstellung eines weiteren Bedienungshebels für das vollautomatische Schalten eines erfindungsgemäßen Getriebes;

Fig. 29 ein Blockschaltbild einer computergesteuerten Vollautomatik für ein Getriebe nach der Erfindung;

Fig. 30 ein Blockschaltbild für eine teilautomatische

Fig. 31 eine drehelastische Verbindung mit Drehzahl- und Belastungsgeber; und

Fig. 32 eine Elektro-Hydro-Kupplung.

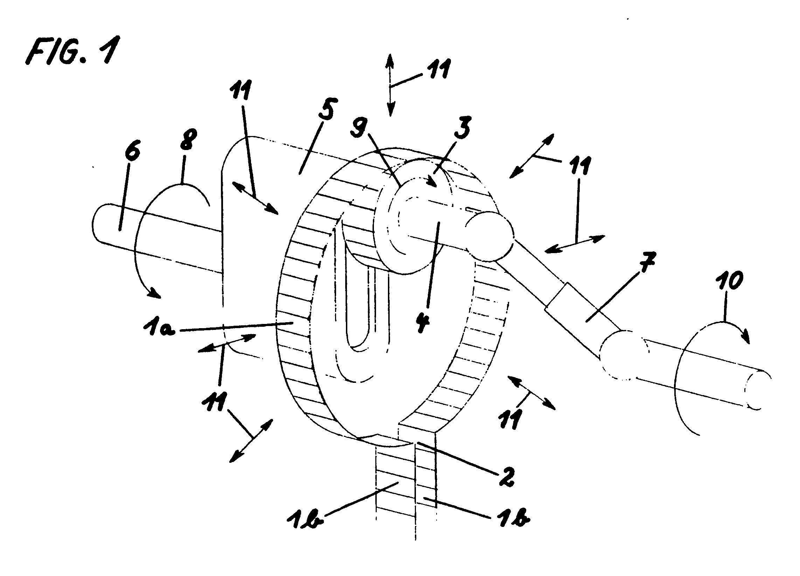

Es sei zunächst anhand der Fig. 1 eine besonders einfache Ausführungsform eines veränderbaren Zahnradgetriebes beschrieben, in der von dem Zahnrad veränderbarer Zähnezahl, das auch als Regelrad bezeichnet ist, nur die Gliederkette 1 dargestellt ist, anstelle deren auch einzelne Glieder oder ein Gliederband vorgesehen sein können. Die Gliederkette 1 ist durch eine in Fig. 1 nicht dargestellte Spannvorrichtung zu einem Zahnrad aufgespannt; sie besteht infolgedessen einerseits aus dem zum Zahnrad aufgespannten kreisringförmigen Teil 1a und daran anschließenden Teilen 1b, die sich außerhalb des wirksamen Spannradius befinden und von denen entweder zur Vergrößerung der Zähnezahl des Regelrads Kettenglieder in den wirksamen Spannradius, d. h. in den kreisringförmigen Teil 1a zugeführt werden oder die zur Verkleinerung der Zähnezahl des Regelrads Glieder aus dem Bereich des wirksamen Spannradius aufnehmen. Die Stelle 2, an der das Zuführen oder Abführen von Kettengliedern in den kreisringförmigen Teil 1a oder aus diesem erfolgt, wird als Regelschleuse bezeichnet.

Um das feststehende Regelrad dreht sich ein Abgreifrad 3 als Planetenrad, dessen Achse 4 drehbar und radial verschieblich in einem Planetenträger 5 gelagert ist, der auf seiner dem Abgreifrad 3 abgewandten Seite in einer Planetenträgerwelle 6 ausläuft. Auf der anderen Seite des Abgreifrads 3 ist dessen Achse 4 mit einer teleskopisch verlängerbaren Gelenkwelle 7 verbunden.

Zum Zu- und Abführen von Gliedern in den bzw. aus dem Teil 1a kann eines der beiden Teile 1b allein dienen, was hier als Monokettenführung bezeichnet wird. Die beiden Teile 1b können auch an ihren dem Teil 1a abgewandten Enden miteinander verbunden sein, so daß sich eine insgesamt endlose Gliederkette 1 ergibt.

Die Breite der Regelschleuse 2, d. h. der Abstand zwischen dem Anfangs- und Endglied des Teils 1a ist vorzugsweise gleich der Breite eines einzigen Kettenglieds, sie kann jedoch auch gleich der Breite mehrerer Kettenglieder sein, sofern der Umlauf des Abgreifrads durch dazwischenliegende einzelne Kettenglieder sichergestellt ist.

Liegt bei diesem Getriebe der Antrieb an der Planetenträgerwelle 6, dann wird das Abgreifrad 3 um den Teil 1a geführt und gibt entsprechend dem Zähneverhältnis eine gegenläufige Drehung über die Gelenkwelle ab (siehe die Drehpfeile 8, 9 und 10).

Liegt der Antrieb an der Gelenkwelle 7, dann rollt sich das Abgreifrad 3 um den Teil 1a ab und gibt über den Planetenträger 5 eine Gegendrehung ab.

Wird nun das Regelrad, d. h. hier der Teil 1a, in seinem Durchmesser verändert, wie durch die Doppelpfeile 11 angedeutet ist, ändert sich das Übersetzungsverhältnis entsprechend dem Zähneverhältnis zwischen dem Teil 1a und dem Abgreifrad 3. Der zahnweise Schaltvorgang erfolgt kupplungslos innerhalb einer Umdrehungsdauer des Planetenträgers 5, während sich das Abgreifrad 3 nicht im Bereich der Regelschleuse 2 befindet.

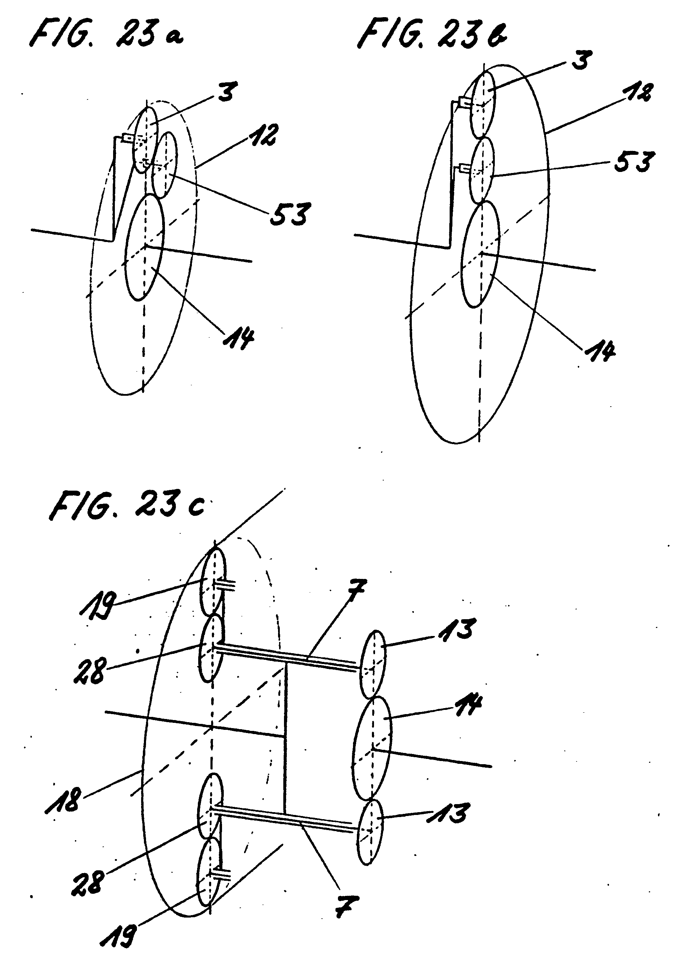

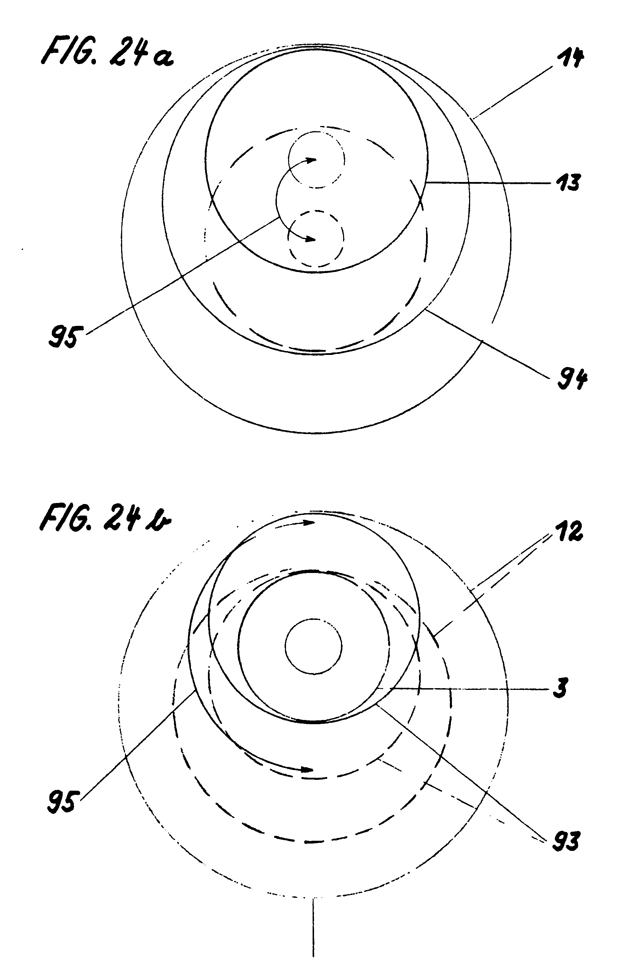

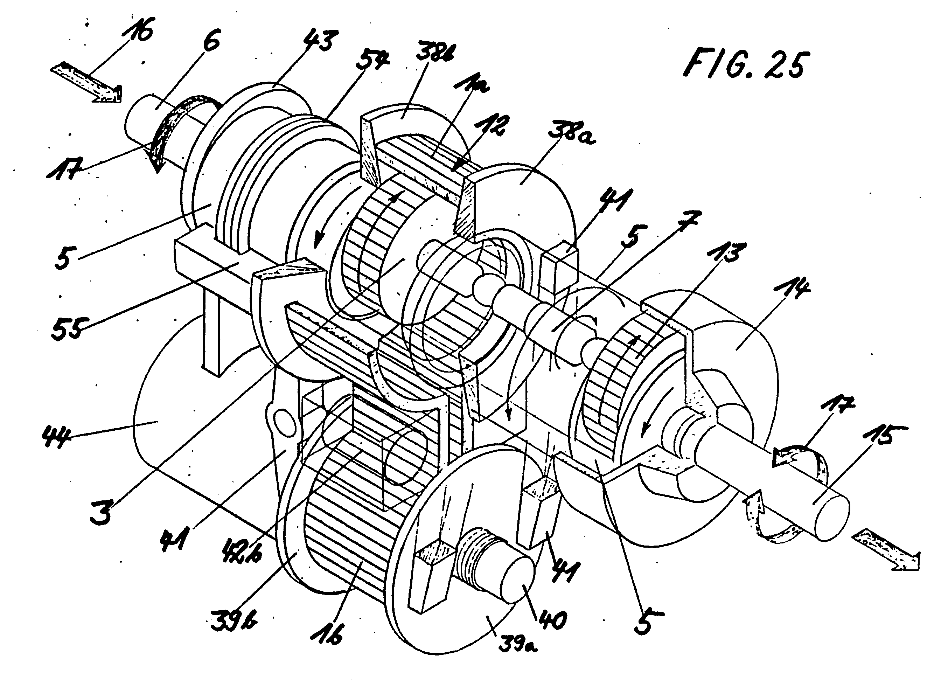

Es sei nun auf die Fig. 2a bis 2c Bezug genommen, in denen eine weitere Ausführungsform des Getriebes dargestellt ist, dessen konstruktive Ausführung in Fig. 25 gezeigt ist. Die jeweiligen entsprechenden oder gleichartigen Bauteile sind in den verschiedenen Figuren mit den gleichen Bezugszeichen versehen. Hier ist das gesamte Abgreifrad 12 eingezeichnet, und auf der Gelenkwelle 7 ist außer dem Abgreifrad 3 ein Synchronrad 13 drehfest angebracht. Das Synchronrad läuft als Planetenrad um ein als Hohlrad ausgebildetes Ausgleichsrad 14 um. Die Welle 15 des Ausgleichsrads 14 ist die Abtriebswelle des Getriebes. Die Gelenkwelle 7 ist am Planetenträger 5 drehbar gelagert.

Das Synchronrad 13 und das Ausgleichsrad 14 ermöglichen eine POSITIV-NULL-NEGATIV-Schaltung, die in den Fig.2a bis c für eine Innenumlaufausführung dargestellt ist:

Die Fig. 2a zeigt eine Getriebestellung im Gang Null. Hierbei hat das Regelrad 12 die gleiche Zähnezahl wie das Ausgleichsrad 14, und das Abgreifrad 3 hat die gleiche Zähnezahl wie das Synchronrad 13. Dadurch ist das Abrollverhältnis zwischen dem Abgreif- und Regelrad 3 bzw. 12 das gleiche wie zwischen dem Synchron- und Ausgleichsrad 13 bzw. 14. Der angetriebene Planetenträger 5 läuft leer. Das Übersetzungsverhältnis beträgt 1 : 0, es ist keine Kraftübertragung möglich. Das Ausgleichsrad 14 steht fest, da es synchron zum feststehenden Regelrad 12 liegt.

Die Fig. 2b zeigt eine Gangstellung mit positiver Drehrichtung. Hierbei hat das Regelrad 12 weniger Zähne als das Ausgleichsrad 14. Wird nun durch Antrieb des Planetenträgers 5 das Abgreifrad 3 um das Regelrad 12 geführt, wird dadurch das Synchronrad 13 weniger gedreht als im leeren Lauf, wodurch sich das Ausgleichsrad 14 in Antriebsrichtung mitdreht. Der Antrieb wird positiv untersetzt.

Die Fig. 2c zeigt eine Gangstellung mit negativer Drehrichtung. Hierbei hat das Regelrad 12 mehr Zähne als das Ausgleichsrad 14. Dadurch wird das Synchronrad 13 mehr gedreht als im leeren Lauf, wodurch sich das Ausgleichsrad 14 gegen die Antriebsrichtung dreht. Der Pfeil 16 deutet die Eingangsdrehung an, während die Pfeile 17 den Drehrichtungssinn (positiv oder negativ) andeuten. Die Ausführungsform des Getriebes nach den Fig. 3a bis 3c unterscheidet sich von derjenigen nach den Fig. 2a bis 2c dadurch, daß es sich hier um ein Außenumlaufgetriebe handelt, bei dem das Regelrad 2 und das Ausgleichsrad 14 als Sonnenräder angeordnet sind. Im übrigen gilt das zu den Fig. 2a bis 2c Gesagte.

Haben in den Fig. 2a bis 3c das Abgreifrad 3 und das Synchronrad 13 eine unterschiedliche Zähnezahl, dann werden die Übersetzungsverhältnisse verschoben. Damit können bei ungeraden Zähneverhältnissen auch POSITIV-NEGATIV-Getriebe ohne Nullgang ausgeführt werden.

Werden derartige Getriebe miteinander kombiniert, sind damit unterschiedlichste Mischschaltanordnungen möglich. Ein Beispiel ist in Fig. 4 gezeigt, wonach zwei Getriebe der in den Fig. 2a bis 2c gezeigten Ausführungsform gegeneinanderliegend angeordnet sind, so daß deren beide Ausgleichsräder 14 durch die Welle 15 drehfest miteinander verbunden sind. Hierbei ergibt sich bei den dargestellten Übersetzungsverhältnissen 1 : 0 : 0 : 1 eine Leerlaufschaltung, so daß sich die beiden Wellen 6 unabhängig voneinander drehen können, was einem ausgekuppelten Zustand zwischen diesen beiden Wellen entspricht, obwohl keine Kupplung vorhanden ist. Die vorliegenden Getriebe können in ihrem Aufbau sowohl als Innenumlauf- als auch als Außenumlaufgetriebe, sowie bei besonderer Verzahnung auch als Kegel- oder Tellerumlaufgetriebe ausgeführt werden; daneben sind auch Kombinationen dieser Anordnungen möglich.

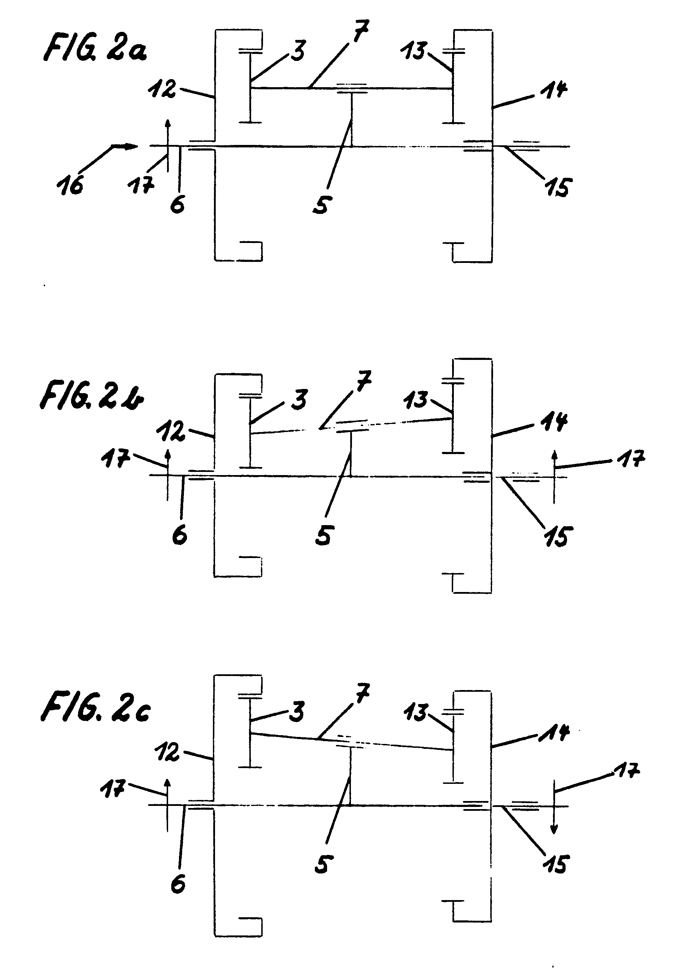

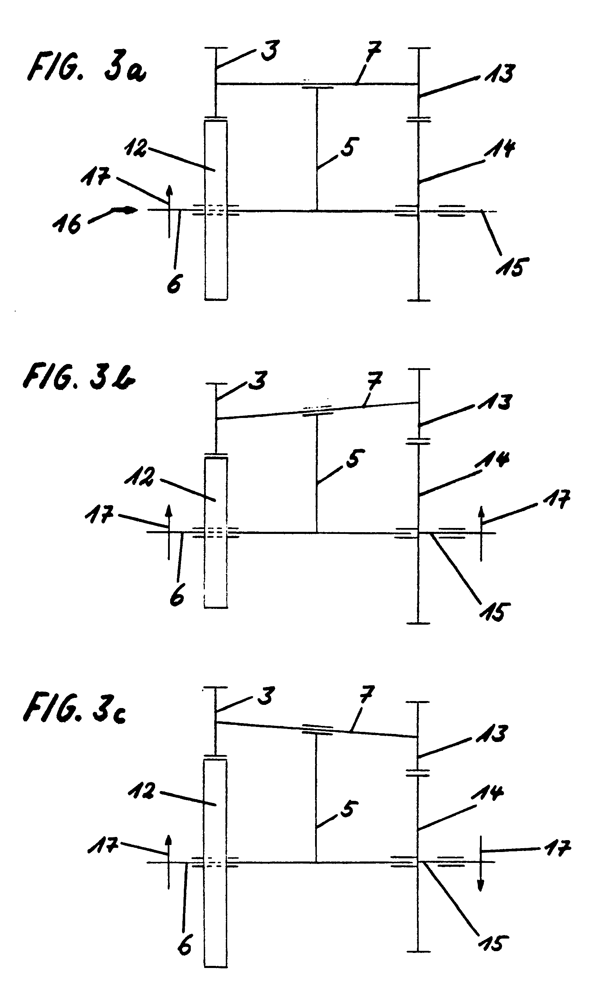

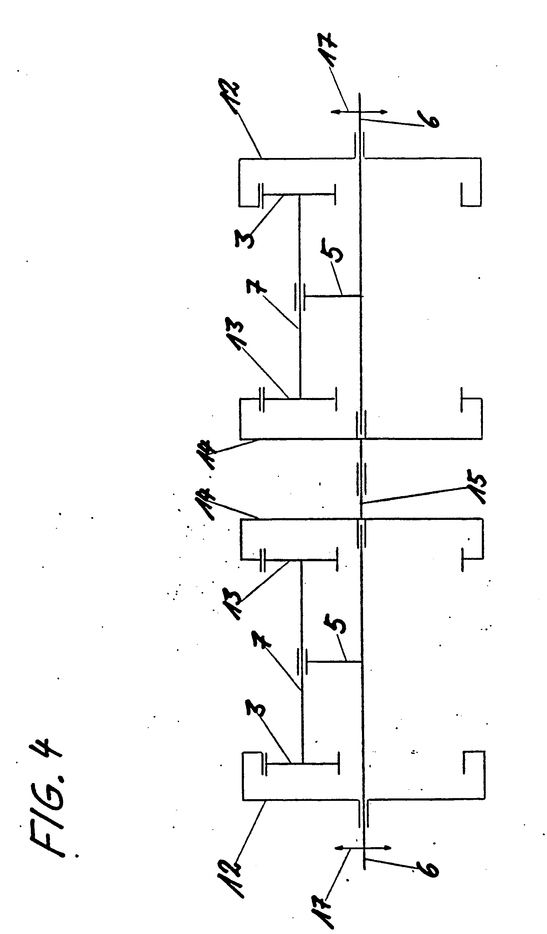

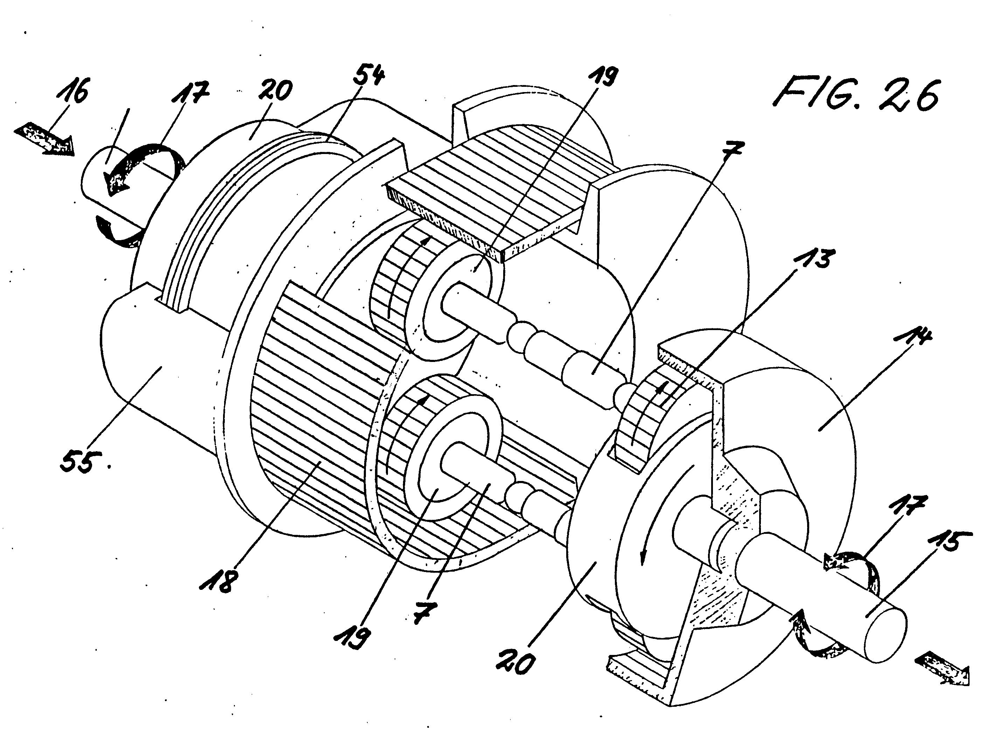

Das Regelrad kann neben der geschlossenen Ausführung auch als offenes Regelrad ausgeführt werden, wie in den Fig. 5, 12, 13 und 26 dargestellt ist. Hier ist der wirksame Zahneingriffsteil 18 des Regelrads, wie insbesondere Fig. 5 zeigt, ein Kreisabschnitt, vorzugsweise ein Halbkreis. Es werden mindestens zwei miteinander synchronisierte Abgreifräder 19 benötigt, so daß sich stets wenigstens eines derselben mit dem wirksamen Zahneingriffsteil 18 in Eingriff befindet. Hier sind beide Abgreifräder 19 am Planetenträger 20 gelagert. Die vorerwähnte Synchronität der Abgreifräder 19 ist in den Ausführungsformen, in denen ein Ausgleichsrad vorhanden ist, ohne weiteres gegeben (siehe die Fig. 24 und 26). Da effektiv immer nur ein Abgreifrad in Eingriff mit dem Zahneingriffsteil 18 ist, ist der Wirkungsgrad von Getrieben mit offenen Regelrädern genau so gut wie derjenige von solchen mit geschlossenen Regelrädern. Die in Fig. 5 eingezeichneten Pfeile zeigen den Bewegungszusammenhang.

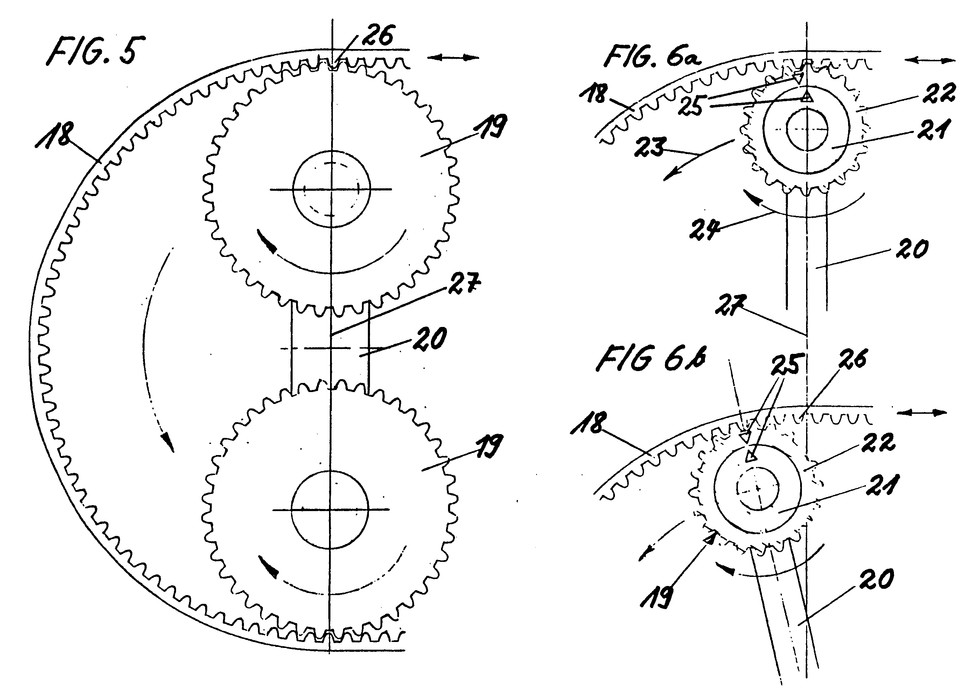

Wie in den Fig. 6a und 6b dargestellt, können Getriebe mit offenen Regelrädern auch so ausgeführt werden, daß der Schaltvorgang unabhängig von der Abgreifradstellung bzw. unabhängig von einer Zeitbegrenzung möglich wird. Das kann insbesondere dadurch erreicht werden, daß die Zahnstellung der Abgreifräder 19 synchron zur Zahnstellung des Regelrads, das hier durch den wirksamen Zahneingriffsteil 18 angedeutet ist, einfedert.

Um diese Einfederung zu erreichen, ist jedes Abgreifrad 19 in eine Nabe 21 und einen Zahnkranz 22 aufgeteilt, die um eine Zahnbreite gegeneinander verdrehbar sind. Der Zahnkranz 22 wird federnd mit der Umlaufrichtung 23 und gegen die Drehrichtung 24 des Abgreifrads 19 mit Druck beaufschlagt. Beim Schalten läßt eine nicht dargestellte Regelnocke, während sich das Abgreifrad 19 im Bereich außerhalb des wirksamen Zahneingriffsteils 18 befindet, den Zahnkranz 22 synchron zu der Zahnteillänge, die in den Zahneingriffsteil 18 zugeführt wird, vorrücken. Dieses Vorrücken ist in Fig. 6a durch die Versetzung von zwei Dreiecksmarkierungen 25 angedeutet. Sofort nach dem Eingriff federt der Zahnkranz 22 unter der Belastung auf seine Anschlagstellung ein, die in Fig. 6b angedeutet ist. Das Übersetzungsverhältnis der Fig. 6a und 6b entspricht dem, als würde der innerhalb des Zahneingriffsteils 18 liegende volle Zahn 26 auf der Zahnhalbkreisteillinie 27 liegen, wie das bei dem gleichbezeichneten Zahn 26 der Fig. 5 der Fall ist; die Zahnhalbkreisteillinie definiert den Anfang und das Ende des wirksamen Zahneingriffsteils 18.

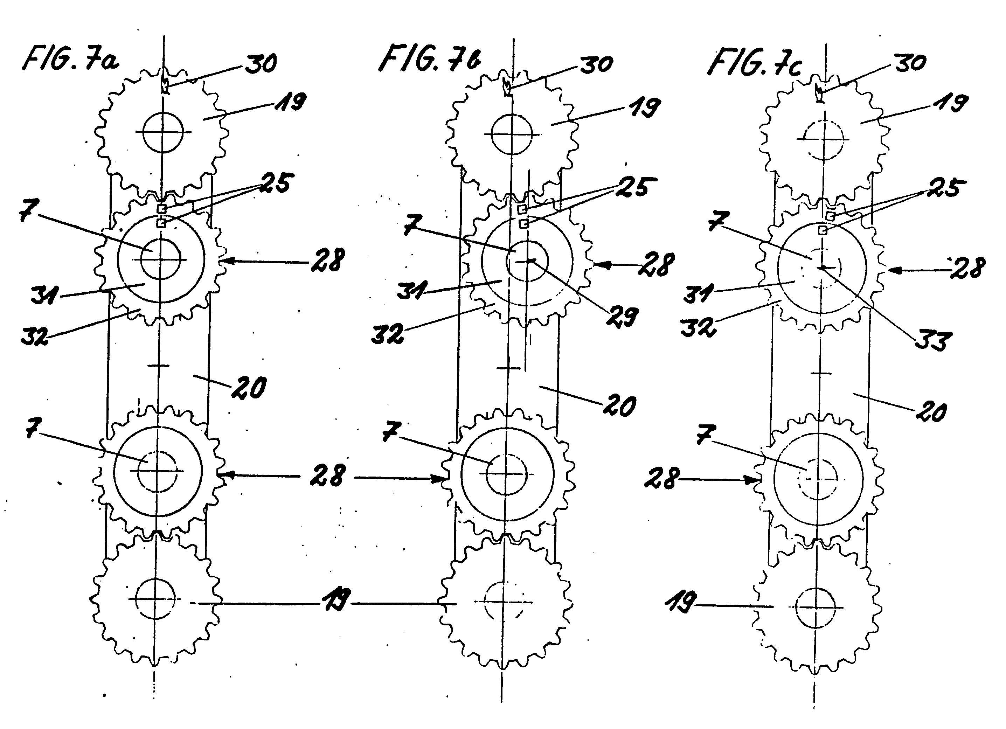

Wenn beispielsweise das Abgreifrad 19 über ein Sekundärabgreifrad 28 mit dem Synchronrad 13 verbunden ist, wie weiter unten anhand der Fig. 24 erläutert wird, kann die Einfederung in der Weise ausgeführt werden, wie nachstehend anhand der Fig. 7a und 7b beschrieben ist:

Hier wird die Zahneinfederfunktion dadurch bewirkt, daß das unter dem Abgreifrad 19 liegende Sekundärabgreifrad 28 pendeln kann (siehe den Pfeil 29). Nach dem Eingriff des Abgreifrads 19 mit dem Zahneingriffsteil 18 federt das Sekundärabgreifrad 28 wieder in seine Grundstellung nach Fig. 7a zurück. Da das sekundäre Abgreifrad 28 an der Gelenkwelle 7 (siehe auch Fig. 24) liegt, wird die Synchronität zwischen den beiden Abgreifrädern 19 durch die Pendelbewegung nicht gestört.

Wird das Getriebe so ausgebildet, daß die Zahnstellung von einem der beiden Abgreifräder 19 synchron zur Zahnstellung des Zahneingriffsteils 18, d. h. also des Regelrads, um einen halben Zahn verstellbar ist, dann kann durch die damit möglichen Halbzahnstufen die Anzahl der Gänge verdoppelt werden. Anstatt eines der beiden Abgreifräder 19 um einen halben Zahn zu verstellen, kann jedes der beiden Abgreifräder 19 um einen viertel Zahn verstellt werden.

Das kann bei der Ausführungsform nach den Fig. 7a und 7b in der Weise geschehen, daß das Auspendeln des sekundären Abgreifrads 28 so weit erfolgt, daß das Abgreifrad 19 dadurch um einen halben Zahn feststellbar verstellt wird (vgl. die Markierungen 30 in Fig. 7a und 7b).

Anstelle einer Verschiebung durch eine Pendelbewegung kann die Halbzahnverstellung auch durch eine feststellbare Verdrehung zwischen der Nabe 21 und dem Zahnkranz 22 in den Fig. 6a und 6b erfolgen.

Die Verstellung des Abgreifrads um einen halben Zahn erfolgt immer dann, wenn gleichzeitig in den wirksamen Zahneingriffsteil, der eine volle Zähnezahl hat, ein halber Zahn eingeführt wird oder daraus ein halber Zahn abgeführt wird. Hat beispielsweise der Zahneingriffsteil 18 die Zahl von 25 Zähnen, entspricht das einem Vollkreis mit 50 Zähnen. Wenn nun ein halber Zahn zugeschaltet wird, erfolgt gleichzeitig die vorstehend beschriebene Halbzahnverstellung des einen Abgreifrads. Die nun vorhandenen 25 1/2 Zähne entsprechen einem Vollkreis mit 51 Zähnen. Wird nun ein weiterer halber Zahn zugeschaltet, dann wird die Halbzahnverstellung des Abgreifrads wieder zurückgenommen.

Schließlich ist es möglich, die Zahnstellung der Abgreifräder 19 synchron zur Zahnstellung des Regelrads bzw. dem Eingriffsteil 18 kontinuierlich synchronisierbar zu machen; dadurch erhält man ein stufenloses Zähnradgetriebe, bei dem im übrigen der Schaltvorgang keiner besonderen zeitlichen Begrenzung unterliegt. Zwei Ausführungsarten einer solchen Synchronisierung werden nachfolgend anhand der Fig. 6a bis 7c erläutert, wobei zu beachten ist, daß diese Synchronisierungsarten mit der vorher anhand der Fig. 6a bis 7b erläuterten Einfederung und Halbzahnverstellung nichts zu tun haben.

Eine solche kontinuierliche Synchronisierung ist mit einem Pendelabgreifersystem nach den Fig. 7a bis 7c möglich, wenn hierbei die Sekundärabgreifräder 28 eine Nabe 31 und einen Zahnkranz 32 aufweisen, die relativ zueinander verdrehbar sind, wobei zwischen Zahnkranz 32 und Nabe 31 ein Freilauf oder eine Magnetkupplung vorgesehen ist. Dabei erfolgt die Korrektur, während sich das Abgreifrad 19 außerhalb des Zahneingriffsteils 18 befindet, indem nach Fig. 7b das sekundäre Abgreifrad 28 durch eine Pendelbewegung das Abgreifrad 19 in die erforderliche Zahnstellung bringt und dann sofort wieder mittels Freilauf oder Auskuppeln der Magnetkupplung in seine Grundstellung nach Fig. 7c zurückkehrt. Die Pendelbewegung ist durch die Pfeile 29 und 33 angedeutet, während die gegenseitige Verstellung zwischen Nabe 31 und Zahnkranz 32 durch die Dreiecksmarkierungen 25 und die Verstellung des Abgreifrads 19 durch die Markierungen 30 angedeutet ist.

Ebenso ist eine solche Korrektur nach den Fig. 6a, 24 und 26 möglich, wenn die Freilauffunktion oder die Magnetkupplung, wie sie anhand der Fig. 7a bis 7c erläutert wurden, zwischen dem Zahnabgriff des Abgreifrads 19 und dem Zahnabgriff des Synchronrads 13 vorgesehen ist. Beispielsweise ist diese Funktion nach Fig. 6a zwischen der Nabe 21 und dem Zahnkranz 22 vorgesehen, sie kann aber auch beispielsweise innerhalb der Gelenkwelle 7 zwischen zwei Teilen derselben oder zwischen der Gelenkwelle 7 und dem Synchronrad 13 vorgesehen sein.

Die Steuerung der Korrektur kann außer mittels einer Nockensteuerung auch rein elektronisch erfolgen. Werden stufenlose Ausführungsformen automatisiert, dann wird ihre Regelung so ausgelegt, daß zum längeren Verharren in einer gewissen Getriebestellung die vollen Zahnstellungen gegenüber den Zwischenzahnstellungen dominieren.

Technisch können Digital-Getriebe sehr verschiedenartig ausgeführt sein. Die Fig. 8 bis 14 zeigen verschiedene Ausführungsformen von Führungen der Gliederkette bzw. des Gliederbands 1. So zeigt die Fig. 8 die Führung für ein Außenumlaufregelrad, während die Fig. 9 eine Führung für ein Innenumlaufregelrad mit Monokettenführung zeigt, wobei der Pfeil 8 die Umlaufrichtung des Regelrads und der Doppelpfeil 34 die Richtung des Zu- und Abführens von Gliedern andeuten.

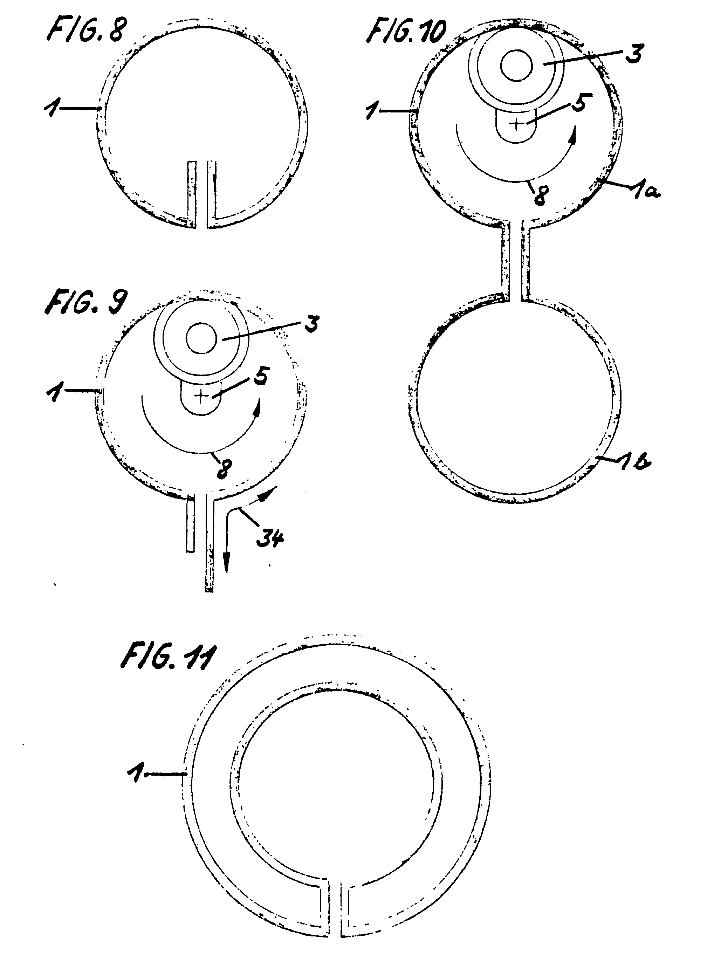

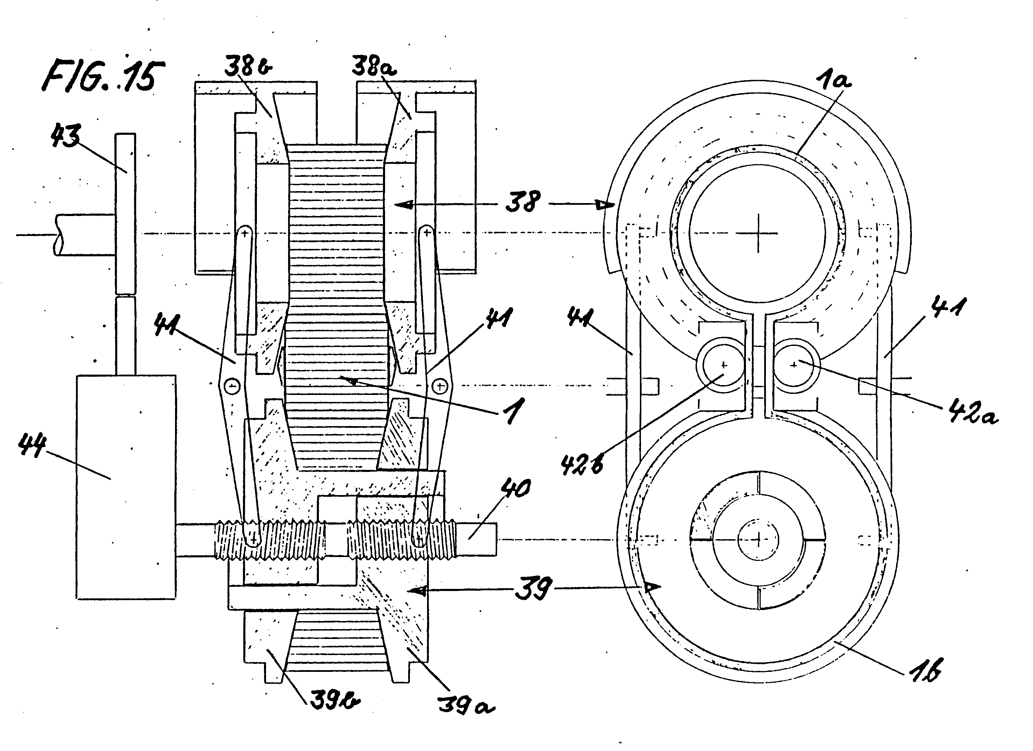

Die Fig. 10 veranschaulicht eine Umlaufkettenführung für ein Proportionalregelrad. Bei einem Proportionalregelrad, wie es auch in den Fig. 15 und 25 dargestellt ist, wird die Gliederkette bzw. das Gliederband 1 über gegenläufig bewegte Spannbacken mit spiralförmigen Führungswegen, die weiter unten beschrieben sind, in Doppelkreisform aufgespannt. Hierbei vergrößert sich die Kettenlänge in dem einen der beiden Kreise immer um den gleichen Betrag, um den sie sich in dem anderen der beiden Kreise verkleinert, und umgekehrt.

Die Fig. 11 zeigt eine ineinanderliegende Proportionalkettenführung; sie kann für Innen- und Außenumlaufausführungen verwendet werden.

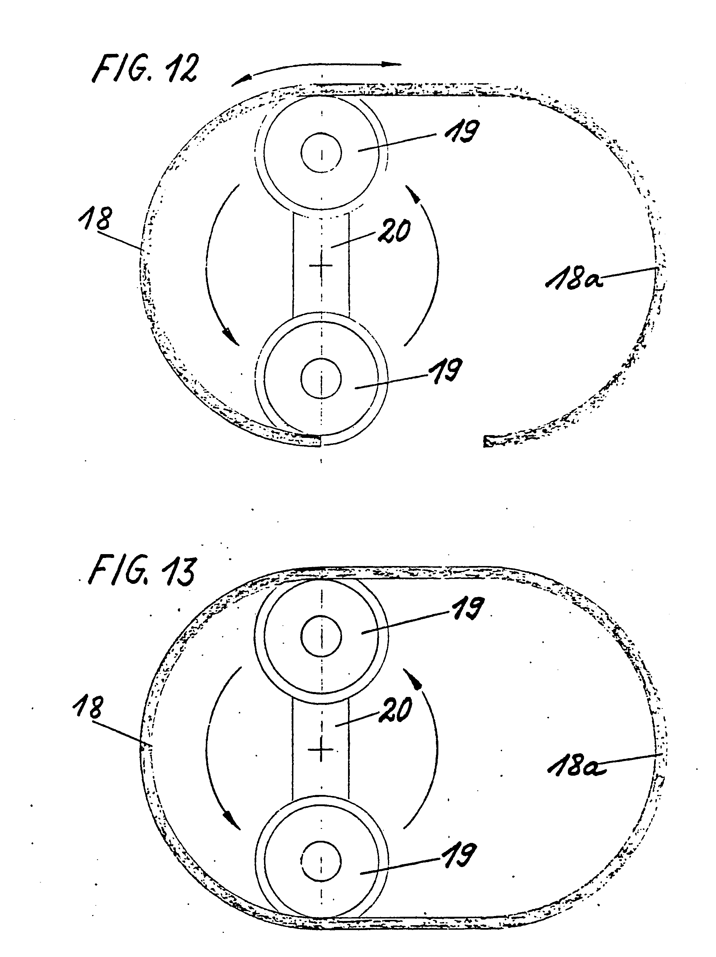

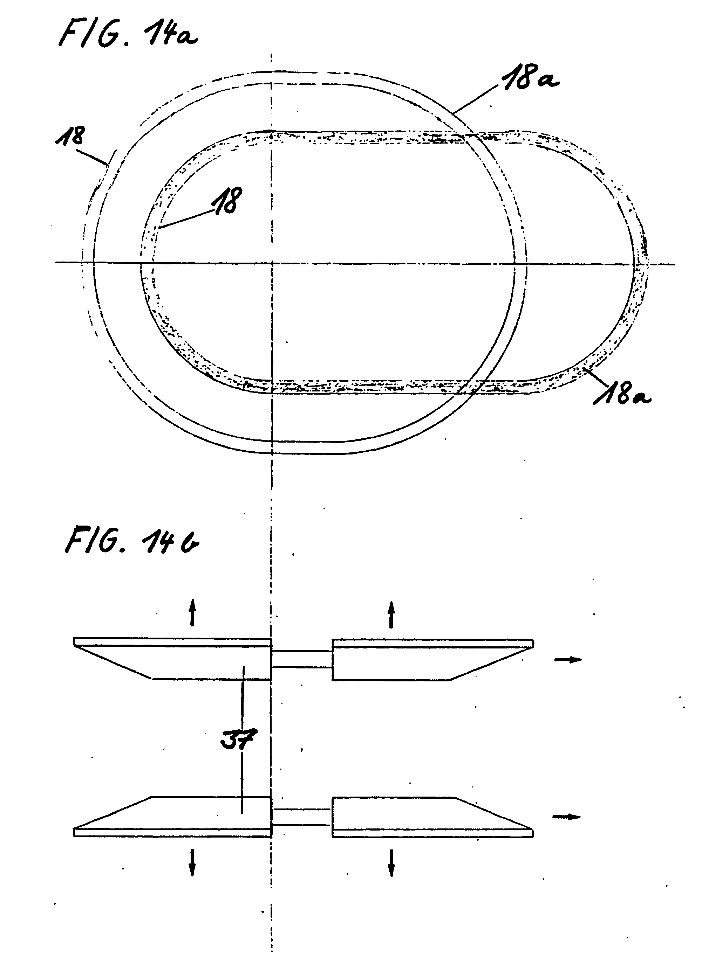

Kettenführungen für offene Regelräder zeigen die Fig. 12 und die Fig. 13, worin mit 18a der Teil der Gliederkette bezeichnet ist, der außerhalb des wirksamen Zahneingriffsteils 18 liegt. In Fig. 14a ist die gesamte Gliederkette 18, 18a in zwei verschiedenen Spannstellungen gezeigt, die mittels Spannbacken 37 verwirklicht werden, welche in Fig. 14b in Großstellung des Regelrads dargestellt sind; die Pfeile zeigen die Verstellrichtung der Spannbacken 37 für die Kleinstellung des Regelrads an.

Die Fig. 15 zeigt eine technische Ausführung eines Proportional-Regelrads, worin das Gliederband 1 endlos ausgebildet und außerdem über eine gegenläufig synchron zu der Spannvorrichtung 38 wirkende Gegenspannvorrichtung 39 geführt ist. Werden die Spannbacken 39a und b der Gegenspannvorrichtung 39 mit einer Rechts- und Linksgewinde-Regelspindel 40 verstellt, bewegen sich die Spannbacken 38a und b der Spannvorrichtung 38 mittels Verstellhebeln 41 gegenläufig. Dadurch werden bei der Verstellung der Regelspindel 40 die beiden Kettenkreise aus den Teilen 1a und 1b der Gliederkette 1 in ihrer Größe zueinander gegenläufig verändert. Vergrößert sich der obere Kettenkreis aus dem Teil 1a, dann verkleinert sich der untere Kettenkreis aus dem Teil 1b, und umgekehrt.

Eine an dem Planetenträger vorgesehene Steuernocke 43 regelt über einen Schaltservo 44 den Augenblick des Schaltens.

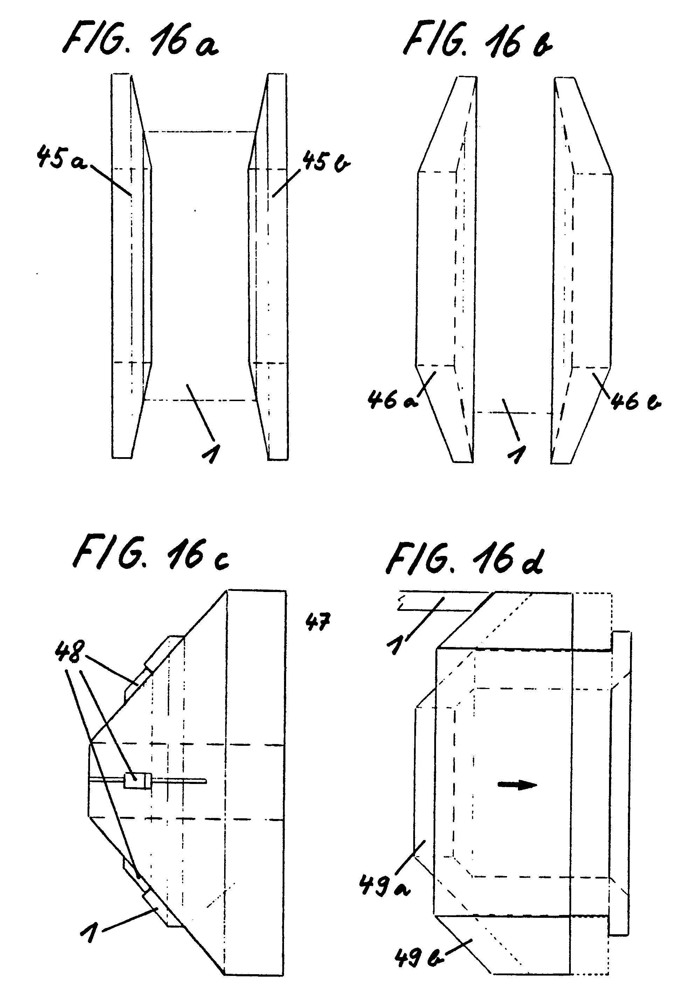

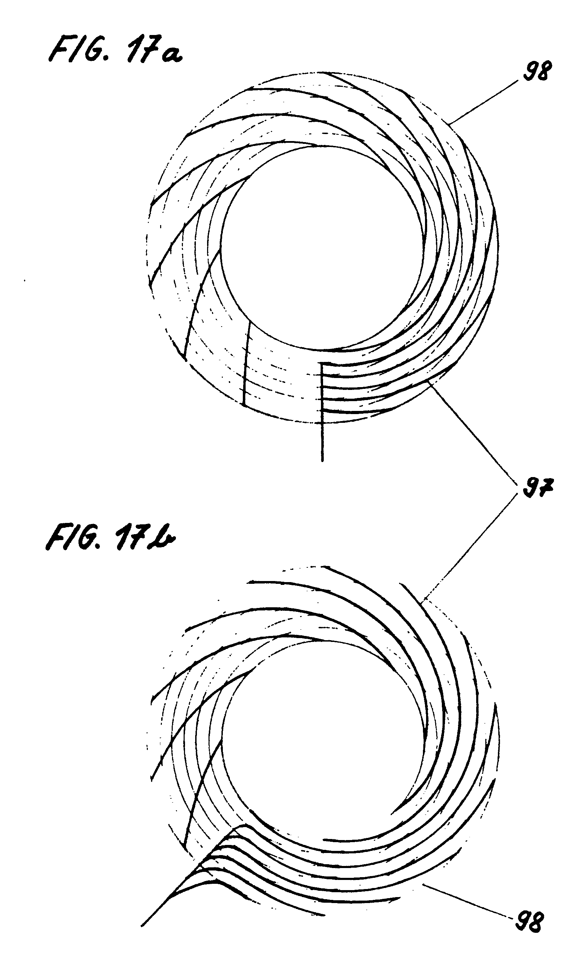

Verschiedene Ausführungsformen von Spannbacken mit spiralförmigen Führungswegen (in Fig. 16a bis 16d nicht dargestellt) zum Spannen der Gliederkette 1 sind in den Fig.16a bis 16d dargestellt. So zeigt die Fig.16a ein gewöhnliches, vorzugsweise verwendetes Spannbackenpaar von kegelscheibenförmigen Spannbacken 45a und b mit dazwischen angedeuteter Gliederkette 1. Die Fig. 17 zeigt Hohlspannbacken 46a, b; derartige Hohlspannbacken erhöhen die Elastizität der Gliederkette 1 bei Außenumlauf bzw. verringern diese Elastizität bei Innenumlauf. Die Fig. 16c zeigt eine Monospannbacke 47 für Kegel-, Teller- oder Außenumlaufregelräder. Diese Monospannbacke weist auf ihrer Kegelfläche verstellbare Kettenhalter 48 zur Gegenhalterung der Gliederkette 1 auf. Die Fig. 16d zeigt eine Teleskopspannbacke, die aus zwei teleskopisch zueinander verschiebbaren Teleskopspannbakkenteilen 49a und 49b besteht (siehe den Pfeil). Eine solche Teleskopspannbacke ermöglicht bei großer Gangzahl, die einen großen Spannbackenhub erfordert, schmale Gliederketten. Ähnlich, jedoch gegenläufig, werden Spannbakken für ineinanderliegende Proportionalkettenführungen nach Fig. 11 aufgebaut.

Die Fig. 17a und 17b zeigen die von spiralförmigen Führungswege von Gliedern zweier Regelräder. Mit 97 sind die spiralförmigen Führungswege der einzelnen Glieder bezeichnet, während 98 die Kreise bedeuten, die verschiedenen wirksamen Regelraddurchmessern entsprechen und auf denen die jeweiligen Glieder im Schnittpunkt der Kreise 98 mit den spiralförmigen Führungswegen 97 liegen. Die spiralförmigen Führungswege 97 können zum Beispiel als Führungen für einzelne Glieder, die in Fig. 17a und 17b nicht dargestellt sind, ausgebildet sein.

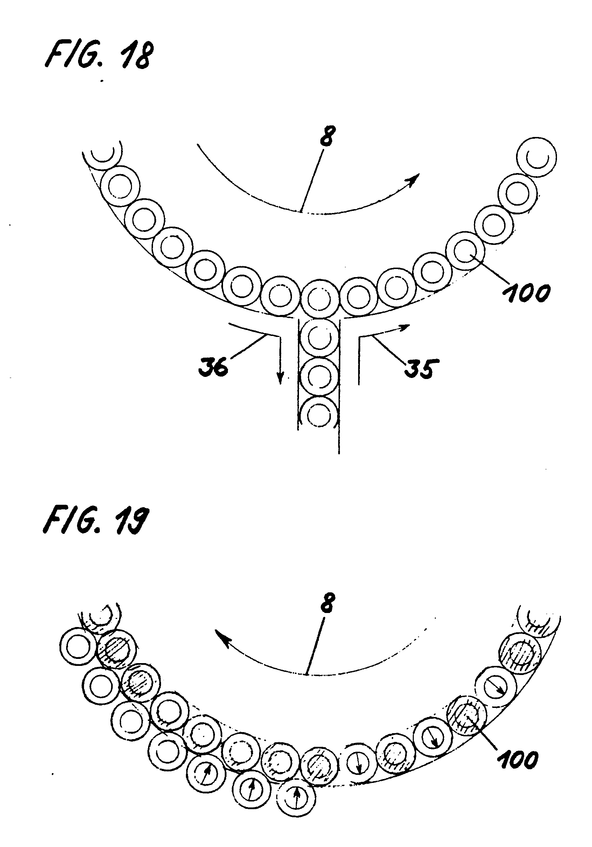

Die Fig. 18 zeigt einen Ausschnitt aus einem kettenlosen Regelrad, wobei die einzelnen Glieder 100 auf Kegelscheiben mittels Spannbändern (beides nicht dargestellt) einspurig in Umlaufrichtung 8 zugeführt (siehe Pfeil 35) und in Umlaufrichtung abgeführt werden (siehe Pfeil 36).

Die Fig. 19 zeigt einen Ausschnitt aus einem superschnell schaltbaren Regelrad, bei dem die einzelnen Glieder 100, die auch zu einer Kette miteinander verbunden sein können, versetzt übereinanderliegen, wodurch sich alle Gänge innerhalb zweier Umdrehungen schalten lassen. Der Pfeil 8 zeigt die Umlaufrichtung, während die kleinen Pfeile auf den einzelnen Gliedern 100 die Zu- und Abführungsrichtungen in das bzw. aus dem Regelrad zeigen.

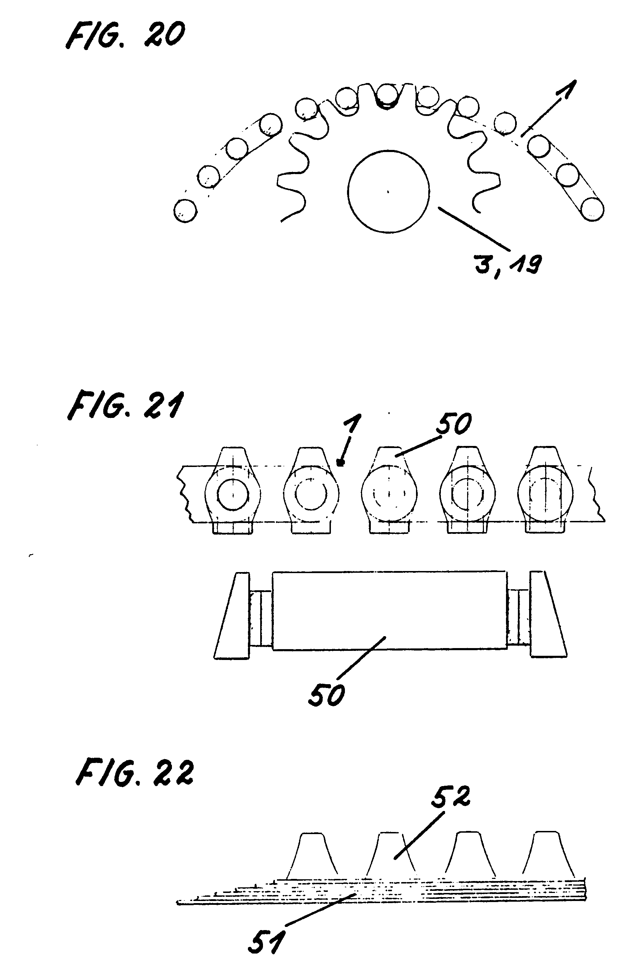

Die Fig. 20 bis 22 zeigen verschiedene Ausführungsformen der Gliederkette bzw. des Gliederbands 1. Wird für den Kraftschluß zwischen der Gliederkette 1 und dem Abgreifrad 3 oder 19 eine sogenannte Triebstockverzahnung angewendet, bei der sich gegen eine Zykloidenverzahnung eine Punktverzahnung ergibt, dann werden als Gliederketten vorzugsweise Bolzen- oder Rollenketten gemäß Fig. 20 verwendet. Wird dagegen für den erwähnten Kraftschluß die sogenannte Evolentenverzahnung oder eine ähnliche Verzahnung benutzt, dann werden als Regelketten vorzugsweise Ketten mit zahnförmigen Bolzen 50 nach Fig. 21 verwendet; dabei wird für die Zahnflankenform ein Mittelwert gewählt. Da die Gliederkette in diesem Fall eine gewisse Elastizität besitzt, stellt sich eine Art formschlüssiges Abgleiten des Abgreifrads von selbst ein, was bedeutet, daß sich das Regelrad dem Eingriff des Abgreifrads anpaßt.

Für offene Regelräder können auch Mehrlagen-Stahlbänder 51 mit aufgesetzten Zähnen 52 nach Fig. 22 verwendet werden.

Die angegebenen Gliederkettensysteme können auch teilweise in Schräg-, Doppelschräg- oder Pfeilverzahnung ausgeführt werden. Außerdem können Gliederketten mit besonderen Zahnformen Verwendung finden, die sich durch die geometrischen Umstände der verschiedenen möglichen Ausführungsformen der Getriebe ergeben; so können z. B. Gliederketten mit halbkugelförmigen Zähnen für Kegelumlaufausführungen vorgesehen sein.

Die Fig. 23a und b zeigen eine Ausführungsform des Getriebes, bei dem das hier mit 53 bezeichnete Synchronrad gleichzeitig sekundäres Abgreifrad ist, wobei das Ausgleichsrad 14 als Sonnenrad angeordnet ist; die Fig. 23a zeigt einen Zustand kleinen Durchmessers des Abgreifrads 12, während die Fig. 23b einen Zustand großen Durchmessers des Abgreifrads 12 veranschaulicht. Während das Abgreifrad 3 radial verstellbar geführt ist, ist das Synchronrad 53 pendelnd derart geführt, daß es stets im Eingriff mit dem Abgreifrad 3 und dem Ausgleichsrad 14 gehalten wird.

Die Fig. 23c zeigt eine Ausführung für offene Regelräder in Großstellung des Regelrads bzw. mit großem wirksamem Zahneingriffsteil 18, die sich von der Ausführungsform nach den Fig. 23a und b dadurch unterscheidet, daß das sekundäre Abgreifrad 28 und das Synchronrad 13 gesonderte, über eine Gelenkwelle 7 verbundene Zahnräder sind; im übrigen wird auf die Erläuterung der Fig. 7a bis c verwiesen.

Die Fig. 24a zeigt eine gelenkwellenlose Höhenverstellung am Ausgleichsrad 14 mittels Zwischenrad 94, das zwischen dem Ausgleichsrad 14 und dem Synchronrad 13 angeordnet und am Planetenträger 5 fest gelagert ist. Dieses Zwischenrad 94 ist innen und außen verzahnt und kämmt außen mit dem Ausgleichsrad 14 wie auch innen mit dem Synchronrad 13. Die Höhenverstellung des Synchronrads 13 erfolgt im Schwenkbereich 95 des Zwischenrads 94. Ein Vorzug dieser Ausführung ist es, daß zur Auswuchtung keine gegenläufigen Massen notwendig sind.

Gestrichelt ist die andere Extremstellung des Synchronrads 13 eingezeichnet.

Die Fig. 24b zeigt eine gelenkwellenlose Höhenverstellung mittels eines Zwischenrads 93 am Regelrad 12. Hierbei ist das Abgreifrad 3 fest am Planetenträger 5 gelagert. Die Höhenverstellung erfolgt durch exzentrisches Verschwenken des Zwischenrads 93 im Schwenkbereich 95. Das Zwischenrad 93 weist eine mit dem Abgreifrad 3 kämmende Innenverzahnung und eine mit dem Regelrad 12 kämmende Außenverzahnung auf. Die gestrichelten Linien zeigen die Stellung kleinster Höhe von Regelrad 12 und Zwischenrad 93, während die Stellungen größter Höhe derselben in ausgezogenen Linien dargestellt sind.

In Fig. 25 ist eine technische Ausführung eines Vielgang-Schnellschalt-Getriebes mit Proportionalregelrad dargestellt. Es handelt sich hierbei um ein Untersetzungsgetriebe mit Vorwärts-Null-Rückwärtsschaltung in einfacher Ausführung. Im wesentlichen Aufbau entspricht diese Ausführungsform den Fig. 2a bis c, wobei das Regelrad in der Art der Fig. 15 ausgeführt ist. Der Kraftschluß erfolgt bei dieser Ausführung über nur zwei Zahnradpaare, nämlich das Regelrad 12 und das Abgreifrad 3 einerseits sowie das Synchronrad 13 und das Ausgleichsrad 14 andererseits. Diese Zahnräder 3 und 12 bis 14 bleiben im Gegensatz zu üblichen Schaltgetrieben immer im selben Eingriff. Unabhängig davon, ob das Getriebe im Vorwärts-, Null- oder Rückwärtsgang betrieben wird, bleibt die Drehrichtung des Abgreifrads 3 und des Synchronrads 13 grundsätzlich immer gleich. Die Umlaufrichtung des Planetenträgers 5, dessen sich zwischen dem Abgreifrad 3 und dem Synchronrad 13 befindender Teil nur angedeutet ist, bleibt schon deswegen gleich, weil er eine Einheit mit der Antriebsachse bildet. Lediglich das Ausgleichsrad 14 ändert je nach der Gangart seine Drehrichtung.

Der Schaltvorgang erfolgt über den Schaltservo 44 (siehe auch Fig. 15), wobei der Schaltaugenblick von der Steuernocke 43 geregelt wird. Wird daher an das Schaltservo 44 ein Schaltbefehl gegeben, dann regelt die Steuernocke 43 den Schaltvorgang zeit- und stellungsrichtig; eine solche Steuernocke 43 kann auch bei nicht zu schnell laufenden Getrieben mit einer Zwischenkupplung als Schaltauslöser den Schaltvorgang direkt ausführen.

Auf dem Planetenträger 5 ist ein horizontal verschiebbares, doppelseitig wirkendes Druckkugellager 54 vorgesehen, das über die nicht dargestellte innenliegende Mechanik die Höhenverstellung des Abgreifrads 3 regelt. Die Druckkugellagerverschiebung erfolgt über Hebel 55, die mit der hinteren Spannbacke 38b (siehe Fig. 15) verbunden sind.

Schließlich sei noch darauf hingewiesen, daß die Ausführungsform der Fig. 25 selbstverständlich auch anstelle mit der dargestellten Proportionalkettenführung mit einer anderen Kettenführung ausgebildet sein kann, wie eine z. B. in Figur 9 dargestellt ist.

Die Fig. 26 zeigt eine technische Ausführung eines Digitalgetriebes mit offenem Regelrad als Untersetzungsgetriebe mit Vorwärts-Null-Rückwärts-Gangschaltung. Diese Ausführungsform entspricht im Prinzip den Fig. 5 bis 6b und 13. Das Drehrichtungsverhalten der Zahnräder ist dasselbe wie beim geschlossenen Regelrad, wie es in der Ausführungsform nach Fig. 25 vorgesehen ist. Das Mittelteil des Planetenträgers 20 ist in dieser Figur nicht eingezeichnet, denn diese Bauform kann sowohl als einfaches Vielgang-Schnellschalt-Getriebe nach Fig. 5 als auch mit zeit- und drehstellungsunabhängiger Schaltung, also mit einfedernden Abgreifern, mit einem um einen halben Zahn verstellbaren Abgreifrad 19 zur Verdoppelung der Gangzahl wie auch als rein stufenloses Getriebe ausgeführt sein, wie anhand der Fig. 6a und b weiter oben erläutert ist.

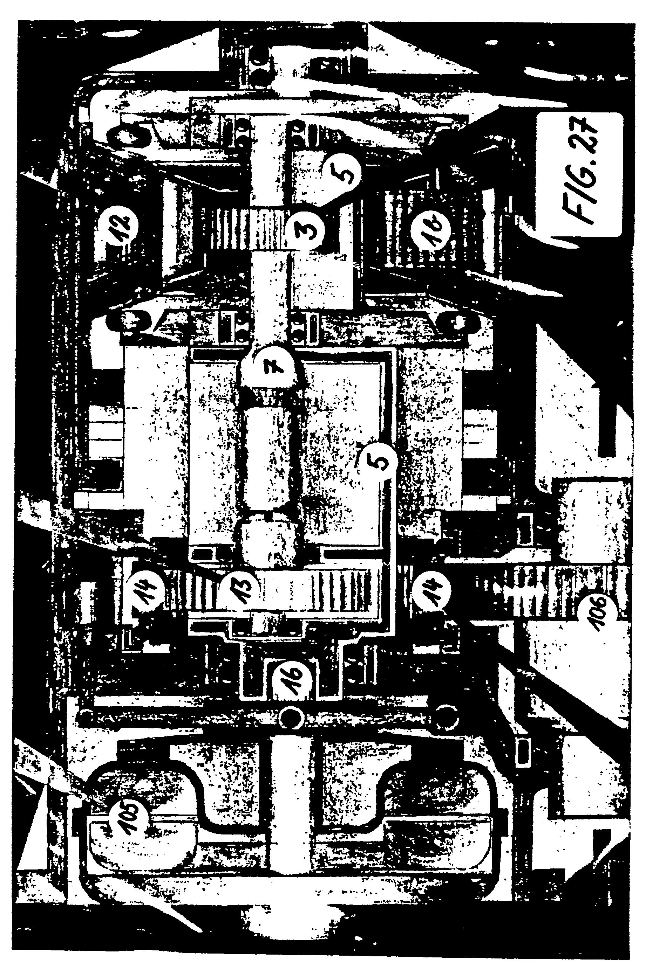

Die Fig. 27 zeigt eine technische Ausführung eines Vielgang-Schnellschaltgetriebes für Frontantrieb mit hydraulischem Ruckdämpfer 105 und Differential 106. Hier liegt das Ausgleichsrad 14 am Eingang 16 des Getriebes, während das Regelrad 12 die sonst (siehe die übrigen Figuren) übliche Stellung des Ausgleichsrads einnimmt. Das Ausgleichsrad 14 ist hierbei innen und außen verzahnt, wobei die Innenverzahnung mit dem Synchronrad 13 kämmt, während die Außenverzahnung mit dem Differential 106 kämmt. Das Regelrad 12 ist hier ein Proportionalregelrad mit einer Kettenführung nach Fig. 11.

Es sei nun näher auf die Steuerung von Digitalgetrieben eingegangen, die sehr einfach ist, da diese Getriebe kupplungslos schalten, nur zweierlei Steuerbefehle benötigen und die Schaltfunktionen in den bevorzugten Ausführungsformen selbsttätig durchführen.

Für eine rein mechanische Steuerung genügt infolgedessen schon ein einfacher, gegenläufig kippbarer Hebel, mit dem eine Plus- oder Minusschaltfunktion des Getriebes aktiviert wird. Eine Anzeige für den jeweiligen Gang kann am Regelrad abgegriffen werden.

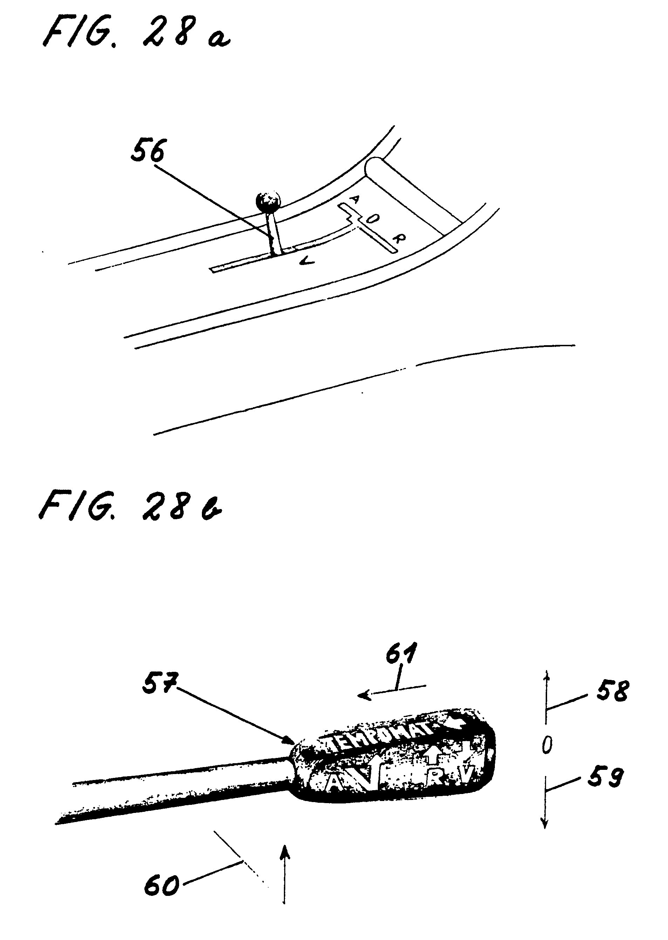

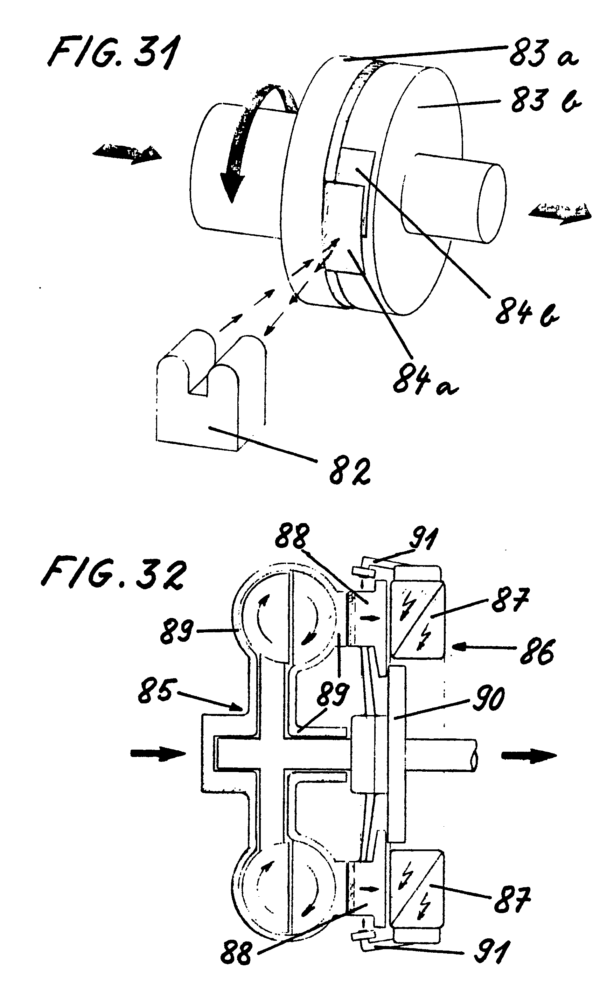

Eine erweiterte Ausführungsform ist in Fig. 28a gezeigt; hier wird mit einem Schalthebel 56 eine bestimmte Gangstellung vorgegeben, und das Digitalgetriebe schaltet dann nachlaufend selbsttätig, bis es diesen Sollwert erreicht hat. V bedeutet die Vorwärtsgänge, R die Rückwärtsgänge, O den Nullgang, und A bedeutet den ausgekuppelten Zustand oder Leerlauf (hinsichtlich des Leerlaufs siehe Fig. 4 und bezüglich des ausgekuppelten Zustands Fig.32).

Vielgang-Schnellschaltgetriebe schalten zwar kupplungslos, haben aber in einfacher Ausführungsform keine abtriebsseitige Leerlauffunktion. Deshalb ist es bei Fahrzeugen für den Schiebebetrieb erforderlich, eine Kraftschlußunterbrechung vorzusehen. Diese kann in der einfachsten Ausführung mittels einer Klauenkupplung oder durch Verschiebung des Differentialritzels durchgeführt werden oder durch die in den Ausführungen nach Fig. 6a-7c vorgesehenen Magnetkupplungen.

Wie bereits aus den Steuer- und Schaltfunktionen erkennbar ist, wurde das vorliegende Kraftübertragungssystem vor allem für automatische Ansteuerungen konzipiert, und zwar hauptsächlich für elektronische Steuerungen, insbesondere für den Einsatz der Mikroprozessortechnologie, zum Zwecke allerhöchster Regel- und Arbeitspräzision, sowie einer echten, tatsächlichen Vollautomatikfunktion.

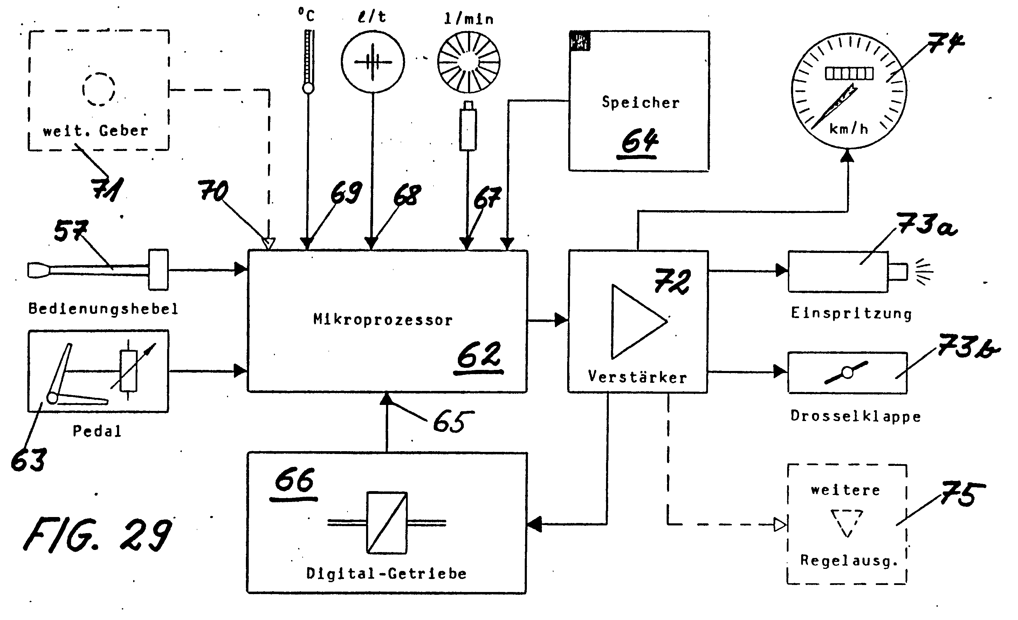

Bei den derzeit üblichen Wandlerautomatiken wird das selbsttätige Schaltverhalten durch die Belastung bestimmt. Das hat das eingangs erörterte widersinnige Verzögerungsverhalten zur Folge, bei dem bei Gaswegnahme zur Verringerung der Fahrgeschwindigkeit eine derartige Automatik infolge der geringen Belastung hochschaltet anstatt auf einen niedrigeren Gang zu schalten. Die Fig. 29 zeigt ein Blockschaltbild einer bevorzugten Steuerelektronik für ein computergesteuertes Digitalgetriebe mit Vollautomatikfunktion zum Verändern der Kraftübertragungsverhältnisse. Diese Steuerelektronik ist mittels eines Bedienungselements, vorzugsweise eines Wählhebels 57 auf Null-, Vorwärts- oder Rückwärtsgang schaltbar. Die Fig. 28b zeigt die Funktionsanordnung des Wählhebels 57. In der Grundstellung ist der Nullgang 0 eingeschaltet. Bewegt man den Wählhebel 57 nach oben, erhält man die Rückwärtsgänge (siehe den Pfeil 58), während durch eine Bewegung nach unten (Pfeil 59) die Vorwärtsgänge einschalten. Durch ein Bewegen des Wählhebels 57 nach vorn und oben, wie durch den Pfeil 60 angedeutet, wird ausgekuppelt, während ein axiales Antippen (Pfeil 61) eine Tempomatfunktion zur Geschwindigkeitskonstanthaltung aktiviert.

Es sei wieder auf das Blockschaltbild nach Fig. 29 Bezug genommen, dessen Kernstück ein Mikroprozessor ist, der folgende Eingänge aufweist: Einen Eingang für den Wählhebel 57 und einen Eingang für das Gaspedal 63, einen Eingang für einen Speicher 64, der die Motor- und Getriebekenndaten enthält, einen Gebereingang 65 für die Stellung des Digitalgetriebes 66, einen Gebereingang 67 für die Motordrehzahl, einen Gebereingang 68 für den Treibstoffverbrauch und einen Gebereingang 69 für die Betriebstemperatur sowie gegebenenfalls Gebereingänge 70 für einen oder mehrere weitere Geber 71. Der Mikroprozessor 62 besitzt Ausgänge über einen Verstärker 72 für die Ansteuerung des Digitalgetriebes 66, die Einspritzung 73a die Drosselklappe 73b und den Fahrgeschwindigkeitsanzeiger 74. Andeutungsweise sind weitere Regelausgänge 75 eingezeichnet, z. B. für Econometer, d. h. für die Treibstoffverbrauchsanzeige.

Wie das Blockschaltbild zeigt, wird mit dieser Computersteuerung nicht nur das Digitalgetriebe 66, sondern auch der Motor geregelt.

Der Motor reagiert nur im Nullgang direkt auf das Gaspedal 63. Wird eine Fahrrichtung gewählt, dann arbeitet das Gaspedal 63 als Geschwindigkeits-Sollwertgeber und gleichzeitig als Beschleunigungs- bzw. Motorbremsregler. Das Gaspedal 63 entspricht in jeder Stellung einem bestimmten Geschwindigkeits-Sollwert. Dabei bestimmt die Soll-Istwertdifferenz die Stärke der Beschleunigung bzw. des Abbremsverhaltens. In der Ruhestellung des Gaspedals entspricht sein Sollwert dem Nullgang. Die Antriebsräder stehen fest. Die Bremsen werden daher gewöhnlich, auch bei schräger Fahrbahn, zum Anfahren und Anhalten nicht benötigt. Wird das Gaspedal betätigt, regelt der Computer die Beschleunigung unter Berücksichtigung der verbrauchsgünstigsten Verhältnisse zwischen Motor und Getriebe, bis der vorgegebene Sollwert im dafür sparsamsten Gang erreicht ist.

Wird das Gaspedal zum Verringern der Geschwindigkeit zurückgenommen, dann regelt der Computer im gleichen Sinne die Verzögerung. Einfacher ausgedrückt bedeutet das, daß um so schneller beschleunigt bzw. umgekehrt die Geschwindigkeit verringert wird, je mehr die Gaspedaldifferenz zum Istwert vergrößert wird. Deshalb schaltet dieses Automatiksystem beim Bergabfahren oder Abbremsen nicht wie herkömmliche Automatikgetriebe hoch, sondern sofort exakt zurück. Dadurch ist der praktische Bedienungskomfort so wie der eines Fahrzeugs ohne Getriebe oder mit stufenlosem Elektroantrieb.

Die Fähigkeit des Computers, den Treibstoffverbrauch so ökonomisch wie möglich zu nützen, besteht im Prinzip darin, daß er einerseits aufgrund der eingespeicherten Kenndaten die maximalen Möglichkeiten zur Leistungsausnützung und andererseits aufgrund der Daten der Meßwertgeber den Betriebszustand kennt und dadurch grundsätzlich "weiß", ob und wie die Leistungsökonomie durch eine Regeländerung zu verbessern ist. Infolgedessen wird bereits während des Entstehens veränderter Leistungsanforderungen in den idealen Gang geschaltet.

Infolge der geschwindigkeitsbezogenen, aufeinander abgestimmten Regelung von Motor und Getriebe werden auch bei höchsten Schaltgeschwindigkeiten, die bei Kraftfahrzeugen bis zu eine hundertstel Sekunde pro Gang betragen können, Schaltrucke ausgeschlossen, indem im Augenblick des Schaltvorgangs die Motorleistung durch Veränderung der Treibstoffzufuhr korrigiert und sofort wieder nachgeregelt wird. Dadurch wird verlustlos eine rein stufenlose Charakteristik erreicht.

Da dieses Steuersystem sowohl das Getriebe als auch den Motor regelt, ist es sehr einfach, weitere Regelfunktionen zu integrieren, wie es z. B. die Geschwindigkeitskonstanthaltung (Tempomat), eine Zylinderabschaltung oder eine Motorabschaltung ist.

Die allgemein als Tempomat bezeichnete Geschwindigkeitskonstanthaltung erfordert dabei lediglich eine Speicherfunktion für den Geschwindigkeitswert und eine Tastfunktion für die Aktivierung durch den Wählhebel gemäß Fig. 28b. Die Löschfunktionen können dabei über die ohnehin vorhandene Steuerung durch das Gaspedal 63, sowie den Bremslichtkontakt aktiviert werden. Aufgrund dieses kaum nennenswerten Mehraufwands, der unter 3 % der heute dafür üblichen Mehrkosten liegen dürfte, kann diese Funktion serienmäßig integriert werden.

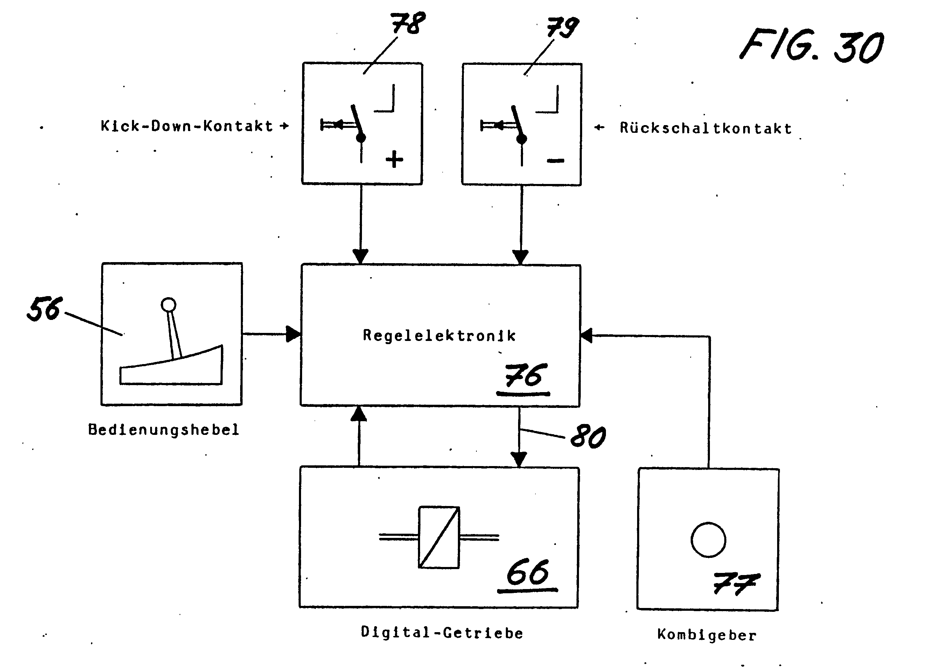

Die Fig. 30 zeigt ein Blockschaltbild einer teilautomatischen elektronischen Steuerung. Das Automatikverhalten dieses Systems ist ähnlich dem einer herkömmlichen Wandlerautomatik. Die hierin vorgesehene Regelelektronik 76 hat einen Eingang für einen Bedienungshebel 56 nach Fig. 27, einen Gebereingang für die Stellung des Digitalgetriebes 66, Gebereingänge für einen Drehzahl- und Belastungsgeber 77 (siehe Fig. 31), einen Gebereingang für einen Aktivierungskontakt für den Kick-Down 78, einen Gebereingang für einen Aktivierungskontakt für die Rückschaltfunktion 79, der am Bremspedal vorgesehen ist, und einen Ausgang 80 für die Ansteuerung des Digitalgetriebes 66.

Der Drehzahl- und Belastungsgeber 77 ist in Fig. 31 gezeigt; er wird von einer drehelastischen Verbindung 81 in Zusammenwirkung mit einer stationären Meßeinrichtung 82, die beispielsweise als Reflexionslichtschranke (wie abgebildet) oder als Induktionsaufnehmer ausgebildet ist, gebildet. Diese drehelastische Verbindung 81 ist zur Ruckdämpfung in Reihe mit dem Digitalgetriebe 66 angeordnet.

Auf dem einen der beiden drehelastisch gegeneinander bewegbaren Teile 83a und 83b ist ein erstes Geberelement 84a vorgesehen, während auf dem anderen dieser beiden Teile ein zweites Geberelement 84b angeordnet ist. Diese beiden Geberelemente 84a und b überlappen einander in der Umfangsrichtung der Teile 83a und b und sind im Falle einer Reflexionslichtschranke als Reflexionsflächen ausgebildet. Die Belastung wird dabei über die in der Meßeinrichtung 82 erhaltene Impulslänge gemessen, da sich je nach Belastung die von den beiden Geberelementen 84a, b gebildete Reflexionsfläche verändert. Die Drehzahl wird über die Anzahl der Impulse pro Zeiteinheit gemessen, wobei ein Impuls einer Umdrehung entspricht.

Der Bedienungshebel nach Fig. 28a entspricht in seiner Funktion derjenigen, die er in der weiter oben angegebenen mechanischen Ausführung hat; jedoch dient er hier zur Ansteuerung der Regelelektronik.

Mit der Stellung des Bedienungshebels 56 wird vorgegeben, wie weit das Digitalgetriebe 66 maximal hochschalten soll. Wird während des Einlegens einer Gangstellung aus dem Nullgang heraus das Bremspedal betätigt, so ist durch dessen Aktivierung der Rückschaltfunktion die Getriebeansteuerung blockiert. Erst nach Lösen der Bremsfunktion wird das Getriebe angesteuert.

Die Elektronik regelt das Digitalgetriebe 66 last- und leistungsbezogen aufgrund der Belastungs- und Drehzahlwerte, die vom Belastungs- und Drehzahlgeber 77 geliefert werden. Wird die Last größer, dann schaltet das Digitalgetriebe zurück, wird sie kleiner, schaltet das Digitalgetriebe hoch, und zwar maximal bis zur vorgegebenen Gangstellung.

Wird das Bremspedal betätigt, dann schaltet das Digitalgetriebe 66 in festen Intervallen zurück. Fixiert werden kann ein Gang beim Unterlastverhalten allerdings nur über den Bedienungshebel 56. Die Kick-Down-Funktion verhält sich wie allgemein bekannt. Die Auskuppelfunktion für den Schiebebetrieb ist so, wie bei der mechanischen Ausführung beschrieben.

Werden bei großen Motordrehzahlbereichen Digitalgetriebe mit wenig Gängen verwendet, können die dadurch möglichen Schaltrucke über eine elektromagnetisch öffnende Kupplung abgefangen werden. Dabei wird während des Schaltvorgangs der Kraftschluß der Kupplung mittels elektromagnetischer Öffnung von der Regelelektronik dosiert.

Eine solche erweiterte Ausführung für hauptsächlich schwierige Anfahrbedingungen zeigt die Fig. 32. Hiernach ist das Digitalgetriebe in Reihe mit einer hydrodynamischen Kupplung 85, die auch als Drehmomentwandler ausgebildet sein kann, angeordnet. Diese hydrodynamische Kupplung 85 bzw. der Drehmomentwandler wird mittels einer elektromagnetischen Kupplung 86 im wesentlichen nur während des Schaltvorgangs wirksam gemacht. Im Ruhezustand des Elektromagneten 87 besteht eine starre Kraftübertragung. Hebt der Elektromagnet 87 die Kupplungsscheibe 88 vom Wandlergehäuse 89 ab, arbeitet die hydrodynamische Kupplung 85 oder der statt dessen vorgesehene Drehmomentwandler. Dadurch können Verluste, wie sie bei hydrodynamischen Kraftübertragungen entstehen, während die Arbeit des Wandlersystems als solche nicht erforderlich wäre, verhindert werden. Für den Schiebebetrieb wird kurzzeitig der Elektromagnet 87 betätigt, und nach Abheben der Kupplungsscheibe 88 bis hin zum Kupplungsanschlag 90 werden Rückhalterollen 91 eingeklappt, damit der Elektromagnet 87 nicht fortwährend eingeschaltet bleiben muß.

Eine solche Elektro-Hydro-Kupplung der in Fig. 32 gezeigten Art eignet sich, vor allem, wenn sie als Drehmomentwandler ausgeführt ist, auch unabhängig von Digitalgetrieben zum Anfahren sehr schwer anlaufender Maschinen sowie zur Wirkungsgradverbesserung gewöhnlicher Wandlerautomatiken.

Das erfindungsgemäße Digitalgetriebe hat insbesondere folgende Vorteile:

Die mögliche Anzahl der Gänge ist nahezu beliebig, wobei der Aufwand für diese vielen Gänge gering ist, da pro Gang jeweils ein Kettenglied mehr oder weniger erforderlich ist. Dadurch werden Ausführungen mit sehr vielen Gängen und damit breiten Übersetzungsbereichen ermöglicht, so daß für jede Betriebsbedingung ein idealer Gang zur Verfügung steht.

Die Vielzahl der Gänge ermöglicht eine stufenlose Charakteristik, und zwar in Verbindung mit einem erstklassigen Bremsverhalten und vor allem den Vorzügen der Getriebebeschleunigung.

Die Vielzahl der Gänge erlaubt einerseits sehr große Übersetzungen, die ein sehr hohes Anfahrdrehmoment ermöglichen, das vor allem ein Durchdrehen der Räder verhindert, und sie erlaubt andererseits sehr kleine Übersetzungen, mit denen niedrige Motordrehzahlen in sogenannten Spargängen genutzt werden können.

Die Getriebebeschleunigung ermöglicht es, die maximale Motorleistung in Beschleunigung umzusetzen, indem der Motor während des Beschleunigungsvorgangs von Anfang an auf Vollgas laufen kann und diese Maximalleistung durch systematisches Hochschalten von den kleinen in die großen Gänge voll auf die Räder gebracht wird. Außerdem ermöglicht sie es in ähnlicher Art und Weise, bei niedrigeren Beschleunigungsleistungen die Motordrehzahlen in dem dafür verbrauchsgünstigsten Bereich zu halten.

Gewöhnliche Schaltgetriebe gestatten keine Getriebebeschleunigung, weil hierbei mit dem Motor in Drehzahlintervallen beschleunigt wird, wodurch die effektive, zur Beschleunigung zur Verfügung stehende Durchschnittsleistung erheblich unter der maximalen Motorleistung bleibt. Außerdem können gewöhnliche Schaltgetriebe im Gegensatz zum Schaltgetriebe nach der Erfindung die idealen Leistungsbereiche wegen zu geringer Anpassung nicht nutzen. Drehmomentwandler und Reibungsgetriebe können dieses zwar teilweise, aber die dadurch erzielten Vorzüge werden durch die Eigenverluste wieder aufgehoben.

Durch den beim erfindungsgemäßen Getriebe möglichen Nullgang werden zum Anfahren und Anhalten auch auf schräger Fahrbahn im allgemeinen keine Bremsen benötigt. Ferner erübrigt sich eine Hand- oder Feststellbremse, da im Nullgang die Antriebsräder feststehen.

Da weiterhin ein Digitalgetriebe, wie bereits erwähnt, ein kupplungslos schaltendes Zahnradgetriebe ist, arbeitet es sehr reibungsarm, wodurch sich ausgezeichnete Wirkungsgrade ergeben.

Die Regeleigenschaften des erfindungsgemäßen Getriebes erlauben unabhängig von der Anzahl der Gänge eine äußerst einfache Ansteuerung des Getriebes mittels Plus- oder Minusimpulsen und schalten das Getriebe in kürzester Zeit kupplungslos. Selbst die Rückwärtsgänge brauchen nicht gesondert geschaltet zu werden.

Die mögliche einfache Automatisierung, die vor allem mittels Mikroprozessoren geschehen kann, ergibt eine echte Vollautomatikfunktion mit einem Bedienungskomfort und einer Regelpräzision bezüglich der Leistungsausnutzung und hinsichtlich des Verbrauchs, die mit keinem bisher bekannten sogenannten vollautomatischen Getriebe vergleichbar ist.

Es ergeben sich weiterhin direkte, indirekte und motorenbautechnische Treibstoffersparnisse:

(a) Direkte Treibstoffersparnisse ergeben sich durch die schnelle automatische Regelung des Getriebes in das jeweils günstigste Übersetzungsverhältnis; dadurch verbraucht der Motor grundsätzlich nur so viel Treibstoff, wie für die jeweilige Fahrsituation minimal erforderlich ist. Auf diese Weise werden etwa 10 bis 20 % an Treibstoff eingespart.

(b) Eine indirekte Treibstoffersparnis ergibt sich durch die Ausnützung der vollen Leistung, insbesondere im Rahmen der Getriebebeschleunigung, was bedeutet, daß aufgrund der mit dem erfindungsgemäßen Getriebe erzielbaren besseren Beschleunigungswerte schwächere und damit verbrauchsgünstigere Motoren verwendet werden können.

## Beispiel:

Einem VW Golf 51 kW Automatik steht zur Beschleunigung eine Durchschnittsleistung von ca. 39 kW zur Verfügung; er hat einen Verbrauch von ca. 11 Liter pro 100 km.

Einem VW Golf D 40 kW, der mit einem erfindungsgemäßen automatisierten Digitalgetriebe ausgerüstet wäre, stünde zur Beschleunigung ebenfalls eine Leistung von rund 39 kW zur Verfügung; er hätte aber nur einen Verbrauch von etwa 5,5 Liter pro 100 km.

Da durch weltweite Geschwindigkeitsbeschränkungen die Wahl der Motorgröße nicht mehr von der Spitzengeschwindigkeit, sondern vielmehr von der Beschleunigung und Elastizität entscheidend bestimmt wird, kann, wie das vorstehende Beispiel zeigt, das praktische Ergebnis dieser Ersparnis unter Umständen bis zu 50 % betragen.

(c) Eine motorbautechnische Treibstoffersparnis ergibt sich insofern, als die Motorenelastizität zugunsten des möglichst geringen Treibstoffverbrauchs vernachlässigt werden kann.

Ein weiterer wesentlicher Vorteil des erfindungsgemäßen Getriebes ist seine Umweltfreundlichkeit, und zwar insbesondere deswegen, weil sich dadurch geringere Abgasemissionen, bis zu 80 % weniger Asbeststaub und eine erhöhte Fahrsicherheit ergeben, wie aus der nachstehenden tabellarischen Übersicht deutlich wird:

(1) Geringere Abgasemissionen ergeben sich durch:

(a) Geringeren Treibstoffverbrauch bzw. bessere Treibstoffausnutzung;

(b) exakte Gemischaufbereitung und -verbrennung durch die elektronische Motorregelung;

Weniger Kohlenmonoxid und Kohlenwasserstoffe

und

(c) optimale Lastanpassung mittels idealem Gang.

(Bei Unterlast ergibt sich eine erhöhte Schadstoffmenge durch Treibstoffmehrverbrauch, während sich bei Überlast eine erhöhte Schadstoffkonzentration durch unvollständige Treibstoffverbrennung ergibt);

(2) bis zu 80 % weniger Asbeststaub; bekanntermaßen bestehen Bremsbeläge aus Asbestverbindungen, deren Abriebstäube krebserregend sind; beim erfindungsgemäßen Getriebe ist dieser Abrieb sehr gering, da die Bremsen wegen der maximal ausgenutzten Motorbremswirkung nur selten betätigt werden müssen;

(3) der erhöhten Fahrsicherheit durch:

(a) das bessere Bremsverhalten (wegen der Ausnutzung der Motorbremswirkung),

(b) den Bedienungskomfort (der eine bessere Konzentration des Fahrers auf das Verkehrsgeschehen erlaubt), und

(c) eine Förderung der Tendenz, Kraftfahrzeuge mit niedrigen Spitzengeschwindigkeiten zu bauen.

Es sei in diesem Zusammenhang darauf hingewiesen, daß Schadstoffe bei Otto-Motoren vor allem Kohlenmonoxid, Kohlenwasserstoffe, Stickoxide, Blei und Geruchsstoffe sind, während Schadstoffe bei Dieselmotoren vor allem Ruß, Stickoxide, Geruchsstoffe, Schwefeldioxid, Kohlenwasserstoffe und Kohlenmonoxid sind.

Durch die erzielten Treibstoffersparnisse sowie sonstige kostensenkende Faktoren, wie z. B. die Möglichkeit, schwächere Motoren zu verwenden, den sich ergebenden geringeren Bremsenverschleiß, etc. ist die insgesamt durch ein computergesteuertes erfindungsgemäßes Getriebe erzielte Kosteneinsparung grundsätzlich größer als es die Anschaffungskosten eines solchen Getriebes sind.

Das erfindungsgemäße Getriebe ist nicht nur mit großem Vorteil in der Kraftfahrzeugtechnik anwendbar, sondern es läßt sich auf den verschiedensten Gebieten mit großen Vorteilen verwenden. Beispielsweise ist es möglich, erhebliche Energieeinsparungen bei schweren Diesellokomotiven dadurch zu erzielen, daß anstelle des dort zum Anfahren normalerweise vorgesehenen elektrischen Drehmomentwandlers ein erfindungsgemäßes Getriebe vorgesehen wird, und zwar vorzugsweise in Verbindung mit einem Elektro-Hydro-Wandler; neben der Energieeinsparung wird dadurch außerdem eine beträchtliche Senkung der Herstellungskosten erreicht.

**Patentansprüche**

1. Kupplungslos veränderbares Zahnradgetriebe mit Gliedern (100), die mittels einer Spannvorrichtung (38) zu einem Kreis mit veränderlichem Durchmesser als Regelrad (12) aufspannbar sind, mit dem wenigstens ein Abgreifrad (3, 19) kämmt, wobei zum Steuern des Zu- und Abführens von Gliedern (100) in den bzw. aus dem Kreis eine Steuereinrichtung vorgesehen ist und wobei jedes Glied (100) in gleichem Abstand vom Mittelpunkt des Kreises gehaltert ist, dadurch gekennzeichnet, daß als Spannvorrichtung (38) spiralförmige Führungswege (97) vorgesehen sind, welche so verlaufen, daß jedes Glied (100) in gleichem Abstand vom Mittelpunkt des Kreises gehaltert ist.

2. Kupplungslos veränderbares Zahnradgetriebe nach Anspruch 1, dadurch gekennzeichnet, daß die spiralförmigen Führungswege (97) auf einer oder mehreren Kegelscheiben vorgesehen sind.

3. Kupplungslos veränderbares Zahnradgetriebe nach Anspruch 1 oder 2, dadurch gekennzeichnet, daß zwischen Regelrad (12) und Abgreifrad (3) ein außen oder innen und außen verzahntes Zwischenrad (28, 53 bzw. 93) vorgesehen ist, welches ständig einen Kraftschluß zwischen Regelrad (12) und Abgreifrad (3) aufrechterhält und dessen Achse beim Verändern des Regelraddurchmessers um die Achse des Abgreifrads (3) verschwenkbar ist.

4. Kupplungslos veränderbares Zahnradgetriebe nach Anspruch 1 oder 2, wobei an das Abgreifrad (3) ein als Planetenrad angeordnetes Synchronrad (13), vorzugsweise axial, angekoppelt ist, das seinerseits an ein Ausgleichsrad (14) angekoppelt ist, dadurch gekennzeichnet, daß zwischen dem Ausgleichsrad (14) und dem Synchronrad (13) ein innen und außen verzahntes Zwischenrad (94) vorgesehen ist, welches ständig einen Kraftschluß zwischen Ausgleichsrad (14) und Synchronrad (13) aufrechterhält und dessen Achse am Planetenträger (5) fest gelagert ist, wobei die Achse des Synchronrads (13) beim Verändern des Regelraddurchmessers um die Achse des Zwischenrads (94) verschwenkbar ist.

5. Kupplungslos veränderbares Zahnradgetriebe nach einem der Ansprüche 1 bis 4, dadurch gekennzeichnet, daß der wirksame Zahneingriffsteil (18) des Regelrads (12) ein Kreisabschnitt ist, und daß mehrere sich miteinander synchron drehende Abgreifräder (19) derart vorgesehen sind, daß stets wenigstens eines derselben mit dem wirksamen Zahneingriffsteil (18) kämmt.

6. Kupplungslos veränderbares Zahnradgetriebe nach Anspruch 5, dadurch gekennzeichnet, daß die Zahnstellung der Abgreifräder (19) synchron zur Zahnstellung des Regelrads (12) einfedernd verstellbar ist, so daß das Zuführen oder Abführen eines Gliedes in den bzw. aus dem wirksamen Spannradius unabhängig von der Drehstellung der Abgreifräder (19) durchführbar ist.

7. Kupplungslos veränderbares Zahnradgetriebe nach Anspruch 4, dadurch gekennzeichnet, daß die Zahnstellung der Abgreifräder (19) synchron zur Zahnstellung des Regelrads (12) um einen halben Zahn verstellbar ist, um die Gangzahl zu verdoppeln.

8. Kupplungslos veränderbares Zahnradgetriebe nach Anspruch 5, dadurch gekennzeichnet, daß die Zahnstellung der Abgreifräder (19) synchron zur Zahnstellung des Regelrads (12) kontinuierlich synchronisierbar ist, um ein völlig stufenloses Verändern des Übersetzungsverhältnisses zu bewirken.

9. Kupplungslos veränderbares Zahnradgetriebe nach einem der Ansprüche 1 bis 8, dadurch gekennzeichnet, daß als Steuereinrichtung eine Steuerelektronik zum Verändern der Kraftübertragungsverhältnisse des veränderbaren Zahnradgetriebes (66) vorgesehen ist, welches eine echte Vollautomatikfunktion hat, indem mit einem Bedienungselement, vorzugsweise mit einem Wählhebel (57), einem Schalter oder einer Tastatur, die Fahrrichtung eines mit dem Zahnradgetriebe (66) betriebenen Fahrzeugs auf Stillstand, Vorwärts oder Rückwärts vorprogrammierbar ist, wobei das Gaspedal (63) über eine in der Steuerelektronik vorgesehene Regelelektronik in Vorwärts- oder Rückwärtsfahrrichtung als Geschwindigkeits-Sollwertgeber und deshalb gleichzeitig als Beschleunigungs- und Motorbremsregler sowie als Anhalte- und Anfahrsteuerung arbeitet, während es im Stillstand direkt auf den Motor wirkt.

10. Kupplungslos veränderbares Zahnradgetriebe nach Anspruch 9, dadurch gekennzeichnet, daß die Steuerelektronik einen Mikroprozessor (62) und einen Speicher (64) aufweist, wobei der Mikroprozessor (62) zum Ansteuern des jeweils idealen Übersetzungsverhältnisses des Zahnradgetriebes (66) vorzugsweise jeweilige Betriebsdaten mit vorgegebenen Speicherwerten vergleicht und das Zahnradgetriebe (66) so lange vorwärts- oder zurückschaltet, bis die Betriebsdaten optimal auf den jeweils vorgegebenen Speicherwert abgestimmt sind.

11. Kupplungslos veränderbares Zahnradgetriebe nach einem der Ansprüche 1 bis 10, dadurch gekennzeichnet, daß es zur Ruckdämpfung in Reihe mit einer drehelastischen Verbindung (81) angeordnet ist, die in Zusammenwirkung mit einer stationären Meßeinrichtung (82) als Drehzahl- und Belastungsgeber (77) ausgebildet ist.

12. Kupplungslos veränderbares Zahnradgetriebe nach einem der Ansprüche 1 bis 11, dadurch gekennzeichnet, daß es in Reihe mit einer hydrodynamischen Kupplung (85) oder einem Drehmomentwandler angeordnet ist, die bzw. der mittels einer elektromagnetischen oder hydraulischen Kupplung (86) im wesentlichen während des Anfahrvorgangs zur Ruckdämpfung oder durch eine Umschaltung für Schiebebetrieb eines Fahrzeugs ständig wirksam gemacht wird.

## Claims

1. Loose coupling adjustable toothed wheel gearing with elements (100) which may be chucked into a circle or variable diameter as a regulating wheel (12) by means of a chucking device (38), with which at least one adjustable wheel (3, 19) meshes, wherein a control appliance is provided for controlling the conveying and transporting of elements (100) into or out of the circle and wherein each element (100) is mounted at the same distane from the centre of the circle, characterised in that spiral guiding tracks (97) are provided as a chucking device (38), which run so that each element (100) is mounted at the same distance from the centre of the circle.

2. Loose-coupling adjustable toothed wheel gearing according to claim 1, characterised in that the spiral guiding tracks (97) are provided on one or several bevel discs.

3. Loose-coupling adjustable toothed wheel gearing according to claim 1 or 2, characterised in that an intermediate wheel (28, 53 or 93) toothed outside or both inside and outside which constantly maintains a power connection between regulating wheel (12) and adjustable wheel (3) and whose axis may be swivelled about the axis of the adjustable wheel (3) under change of the regulating wheel diameter, is provided between regulating wheel (12) and adjustable wheel (3).

4. Loose-coupling adjustable toothed wheel gearing according to claim 1 or 2, wherein a synchronous wheel (13) arranged as a planet wheel is coupled, preferably axially, to the adjustable wheel (3), which synchronous wheel is itself coupled to a differential wheel (14), characterised in that an intermediate wheel (94) toothed outside and inside, which constantly maintains power connection between differential wheel (14) and synchronous wheel (13) and whose axis is firmly mounted on the sun wheel (5), is provided between the differential wheel (14) and the synchronous wheel (13), wherein the axis of the synchronous wheel (13) may swivel around the axis of the intermediate wheel (94) during varying of the regulating wheel diameter,

5. Loose-coupling adjustable toothed wheel gearing according to claims 1 to 4, characterised in that the effective tooth meshing part (18) of the regulating wheel in a circular section, and that several adjustable wheels (19) are provided in such a manner that at least one of them always meshes with the effective tooth meshing part (18).

6. Loose-coupling adjustable toothed wheel gearing according to claim 5, characterised in that the tooth positioning of the adjustable wheel (12) is spring-adjustable, so that the conveyance or transportation of one member into or out of the effective chucking radius may be carried out independently of the rotating position of the adjustable wheels.

7. Loose-coupling adjustable toothed wheel gearing according to claim 4, characterised in that the tooth positioning of the adjustable wheels (19) is adjustable by half a tooth, synchronous to the tooth positioning of the regulating wheel, in order to double the number of starts.

8. Loose-coupling adjustable toothed wheel gearing according to claim 5, characterised in that the tooth positioning of the adjustable wheels (19) synchronous with the tooth positioning of the regulating wheel (12) may be continuously synchronised in order to effect a completely unstepped change of the transmission ratio.

9. Loose-coupling adjustable toothed wheel gearing according to one of claims 1 to 8, characterised in that an electronic control is provided as a control device for changing the power transmission conditions of the variable toothed wheel gearing (66), which has genuine fully automatic functioning, in that the travelling direction of a vehicle driven by the toothed wheel gearing (66) is pre-programmable at rest, forwards or backwards movement with a service element, preferably a selector lever (57), a switch or a keyboard, wherein the accelerator pedal (63) works as a target speed determiner through regulating electronics provided in the electronic control and therefore works simultaneously as an acceleration and motor brake regulator as well as stopping and starting control, while it acts directly on the motor at rest.

10. Loose-coupling adjustable toothed wheel gearing according to claim 9, characterised in that the electronic control comprises a microprocessor (62) and a memory (64), wherein the microprocessor (62) preferably compares the relevant operating data with preassigned memory values for controlling the transmission ratio that is ideal at any one time, and switches the toothed wheel gearing (66) forwards or backwards until the operating data are otimally adjusted to the relevant preassigned memory value.

11. Loose-coupling adjustable toothed wheel gearing according to one of claims 1 to 10, characterised in that it is arranged for vibration-damping in series with a rotating elastic connection which together with a stationary measuring device (82) is designed a rotational speed and loading assignor.

12. Loose-coupling adjustable toothed wheel gearing according to one of the claims 1 to 11, characterised in that it is arranged in series with a hydrodynamic coupling (85) or a turning moment transformer, which is constantly made effective essentially during forward movement for the damping by an electromagnetic or hydraulic coupling (86) or through switching over for sliding operation a vehicle.

## Revendications

1. Engrenage à variation de vitesse sans embrayage, comportant des organes (100) qui peuvent être fixés au moyen d'un dispositif de serrage (38) sous forme d'un cercle de diamètre variable constituant une roue de réglage (12) avec laquelle engrène au moins une roue de prise (3, 19), un dispositif de commande étant prévu pour commander l'amenée et/ou le retrait d'organes (100) sur et/ ou hors du cercle, chaque organe (100) étant maintenu à une même distance du centre du cercle, caractérisé en ce que l'on prévoit, comme dispositif de tension (38), des chemins de guidage en spirale (97) qui s'étendent de façon telle que chaque organe (100) est maintenu à une même distance du centre du cercle.

2. Engrenage à variation de vitesse sans embrayage selon la revendication 1, caractérisé en ce que les chemins de guidage en spirale (97) sont prévus sur un ou plusieurs disques coniques.

3. Engrenage à variation de vitesse sans embrayage selon la revendication 1 ou 2, caractérisé en ce que l'on prévoit entre la roue de réglage (12) et la roue de prise (3) une roue intermédiaire à denture externe ou interne et externe (28, 53, respectivement 93) qui main tient constamment une adhérence entre la roue de réglage (12) et la roue de prise (3) et dont l'axe peut pivoter autour de l'axe de la roue de prise (3), lorsque le diamètre de réglage varie.

4. Engrenage à variation de vitesse sans embrayage selon la revendication 1 ou 2, un pignon de synchronisation (13), agencé en pignon satellite, étant accouplé, de préférence axialement, à la roue de prise (3) et étant accouplé lui-même à un pignon de différentiel (14), caractérisé en ce qu'on prévoit entre le pignon de différentiel (14) et le pignon de synchronisation (13) un pignon intermédiaire à denture interne et externe (94) qui maintient constamment une adhérence entre le pignon de différentiel (14) et le pignon de synchronisation (13) et dont l'axe est placé en position fixe sur le porte-pignons satellites (5), l'axe du pignon de synchronisation (13) pouvant pivoter autour de l'axe du pignon intermédiaire (94), lorsque le diamètre de la roue de réglage varie.

5. Engrenage à variation de vitesse sans embrayage selon l'une des revendications 1 à 4, caractérisé en ce que la section d'engrènement effective (18) de la roue de réglage (12) est un segment de cercle, et en ce que plusieurs roues de prise (19) tournant en synchronisme entre elles sont prévues de façon telle que l'une au moins d'entre elles engrène avec la section d'engrènement effective (18).

6. Engrenage à variation de vitesse sans embrayage selon la revendication 5, caractérisé en ce que la position des dents des roues de prise (19) peut être déplacée élastiquement en synchronisme avec la position des dents de la roue de réglage (12), de sorte que l'amenée et/ou le retrait d'un organe dans et/ou hors du cercle de fixation effectif peut être effectué indépendamment de la position angulaire des roues de prise (19).

7. Engrenage à variation de vitesse sans embrayage selon la revendication 4, caractérisé en ce que la position des dents des roues de prise (19) peut être modifiée en synchronisme avec la position des dents de la roue de réglage (12) d'une demi-dent, pour doubler le nombre de vitesses.

8. Engrenage à variation de vitesse sans embrayage selon la revendication 5, caractérisé en ce que la position des dents des roues de prise (19) peut être synchronisée en continu avec la position des dents de la roue de réglage (12), pour produire une variation entièrement continue du rapport de transmission.

9. Engrenage à variation de vitesse sans embrayage selon l'une des revendications 1 à 8, caractérisé en ce qu'on prévoit, comme dispositif de commande, un ensemble de commande électronique pour faire varier les rapports de transmission du mouvement de l'engrenage à variation de vitesse (66), qui a un fonctionnement véritablement automatique, la direction de marche d'un véhicule fonctionnant avec l'engrenage (66) pouvant, avec un élément de manoeuvre, de préférence un levier de sélection (57), un commutateur ou un clavier, être préprogrammée sur l'arrêt, la marche avant ou la marche arrière, la pédale d'accélérateur (63) fonctionnant, par l'intermédiaire d'un ensemble de réglage électronique prévu dans l'ensemble de commande électronique, en marche avant ou en marche arrière, comme transmetteur de valeurs de vitesse prescrites et, par conséquent, en même temps comme dispositif de réglage d'accélération et de frein-moteur, ainsi que comme commande d'arrêt et de démarrage, tandis qu'elle agit directement sur le moteur à l'arrêt.

10. Engrenage à variation de vitesse sans embrayage selon la revendication 9, caractérisé en ce que l'ensemble de commande électronique comporte un microprocesseur (62) et une mémoire (64), le microprocesseur (62) comparant, pour commander le rapport de transmission chaque fois idéal de l'engrenage (66), de préférence des données de fonctionnement se présentant dans chaque cas à des valeurs mémorisées prédéterminées et modifiant le réglage de l'engrenage (66) dans le sens de l'augmentation ou de la diminution, jusqu'à ce que les données de fonctionnement s'accordent de façon optimale à la valeur mémorisée prédéterminée dans chaque cas.

11. Engrenage à variation de vitesse sans embrayage selon l'une des revendications 1 à 10, caractérisé en ce qu'il est, pour amortir les secousses, placé en série avec une liaison à élasticité rotatoire (81) qui, en coopération avec un dispositif de mesure (82) stationnaire, se présente sous forme d'un transmetteur de vitesse de rotation et de charge (77).

12. Engrenage à variation de vitesse sans embrayage selon l'une des revendications 1 à 11, caractérisé en ce qu'il est disposé en série avec un embrayage hydrodynamique (85) ou un convertisseur de couple, qui est activé en permanence au moyen d'un embrayage électromagnétique ou hydraulique (86), essentiellement pendant le démarrage aux fins d'amortissement des secousses ou par une commutation pour la marche par inertie d'un véhicule.

FIG. 1

FIG. 2a

FIG. 2b

FIG. 2c

FIG. 3a

FIG. 3b

FIG. 3c

FIG. 4

0 096 814

FIG. 5

FIG. 6a

FIG 6b

0 096 814

FIG. 7a

30

19

25

7

28

31

32

20

7

28

19

FIG. 7b

30

19

25

7

28

31

32

29

20

7

28

19

FIG. 7c

30

19

25

7

28

31

32

33

20

7

28

19

0 096 814

FIG. 8

1

FIG. 10

3

1

5

8

1a

1b

FIG. 9

3

1

5

8

34

FIG. 11

1

FIG. 12

18

19

20

18a

19

FIG. 13

18

19

20

18a

19

*FIG. 14a*

18a

18

18

18a

*FIG. 14b*

37

FIG. 15

FIG. 16 a

FIG. 16 b

FIG. 16 c

FIG. 16 d

FIG. 17 a

98

97

FIG. 17 b

98

**FIG. 18**

**FIG. 19**

**FIG. 20**

3, 19

**FIG. 21**

**FIG. 22**

FIG. 23 a

FIG. 23 b

FIG. 23 c

FIG. 24 a

14

13

95

94

FIG. 24 b

12

3

95

93

FIG. 25

FIG. 26

FIG.27

## FIG. 28 a

## FIG. 28 b

FIG. 29

FIG. 30

Kick-Down-Kontakt → **78** **79** ← Rückschaltkontakt

Regelelektronik **76**

**56** Bedienungshebel

**80**

Digital-Getriebe **66**

Kombigeber **77**

0 096 814

FIG. 31

83 a

83 b

84 b

84 a

82

FIG. 32

88

91

89

87

86

85

89

90

87

88

91